(19) Europäisches Patentamt
European Patent Office
Office européen des brevets

(11) **EP 4 283 280 A1**

(12) **EUROPEAN PATENT APPLICATION**

(43) Date of publication:
**29.11.2023 Bulletin 2023/48**

(21) Application number: **22305776.1**

(22) Date of filing: **25.05.2022**

(51) International Patent Classification (IPC):
**G01N 21/21** (2006.01)    **G01N 21/25** (2006.01)

(52) Cooperative Patent Classification (CPC):
**G01N 21/21; G01J 3/0224; G01J 3/0235;**
**G01J 3/32; G01J 3/447; G01N 21/25;**
G01N 2021/213

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Ecole Polytechnique**
  **91120 Palaiseau (FR)**

• **Centre national de la recherche scientifique**
  **75016 Paris (FR)**

(72) Inventor: **GARCIA CAUREL, Enrique**
  **92160 ANTONY (FR)**

(74) Representative: **Cabinet Nony**
  **11 rue Saint-Georges**
  **75009 Paris (FR)**

(54) **A SYSTEM FOR THE POLARIMETRIC CHARACTERIZATION OF A TARGET**

(57)    A system (1) for the polarimetric characterization of a target (9) is described, the system comprising:
- a polychromatic illumination source (4) for emitting a polychromatic radiation light beam (5),
- downstream from said illumination source (4) and upstream from said target (9), at least one polarization state generator (6) including at least one rotatable polarizer (11) and at least one rotatable retarder (12),
- downstream from said target (9), at least one polarization state analyser (8) including at least one rotatable retarder (13) and at least one rotatable polarizer (14), and
- at least one detection system (7) for measuring an intensity of the light beam (5) downstream from the at least one polarization state analyser (8).

Fig. 1

Figure 1

## Description

## Field of the invention

The present invention relates to a system for the polarimetric characterization of a target and to a related method. More particularly, but not exclusively, it relates to polychromatic Mueller polarimetric characterization of a target.

## Prior art

A Mueller polarimeter is an optical instrument sensitive to the polarization of light and configured to determine the Mueller matrix of a given sample. A Mueller matrix is a 4x4 matrix which fully describes the polarimetric response of a sample. A typical Mueller polarimeter consists of two parts, often installed in two separated optical arms. The first arm is generally termed as the "illumination arm", because it includes a light source and a polarization state generator ("PSG"). The second arm, in general called, "analysis arm", typically includes a detector and a polarization state analyser ("PSA"). The PSG and the PSA can comprise, each, several polarizers and retarders.

According to the Stokes-Mueller formalism, the polarization of a radiation beam can be described with a four-dimensional vector called the Stokes vector, which can be defined as $S = (S_0, S_1, S_2, S_3)^T$, where the superscript T stands for transpose operation. If the three components S1, S2 and S3 are taken as the three orthogonal coordinates of a tri-dimensional Euclidean space, then, all physically realizable polarization states can be represented as points located either inside or at the surface of a sphere known as the "Poincaré Sphere".

A typical PSG in a Mueller polarimeter can be operated to generate a series of polarization states. Therefore, the action of a PSG can be represented using a matrix, called matrix **W,** which consists in the concatenation in successive columns, of the Stokes vectors related to the states that can be generated with said PSG. The ensemble of points represented in the Poincaré sphere associated to all columns of said W matrix can be considered together as the vertexes of a polyhedron. A typical PSA in a Mueller polarimeter can be operated and set to a series of polarization analysis configurations used to determine the polarization state of a radiation beam. The action of a given PSA can also be represented in terms of a matrix, designated as matrix A. In a typical PSA, each row of said matrix A corresponds to the transposed Stokes vector. The ensemble of points in the Poincaré sphere associated to the rows of a given matrix A corresponds to the vertices of a polyhedron.

The determination of the Mueller matrix M from a matrix B containing the ensemble of radiation intensity measurements done by the polarimeter during normal operation requires the inversion of matrices A and W according to the following equation $M = A^+ B\ W^+$. The superscript + means the generalized inverse.

A good polarimetric characterization of a target requires a polarimeter satisfying objective criteria, particularly the minimization of the propagation of random noise and eventual systematic error.

It is known from D.S. Sabatke et al, in the article "Optimization of retardance for a complete Stokes polarimeter", Opt. Lett. 25, 802-804 (2000), and from J.S. Tyo, in the article "Design of optimal polarimeters: maximization of signal-to-noise ratio and minimization of systematic error", App. Opt. 41, 619 (2002), that the propagation of noise and errors are minimized when the condition number of the matrices A, $c(A) = 1/(\|A\| \cdot \|A^+\|)$, and W, $c(W) = 1/(\|W\| \cdot \|W^+\|)$, are maximized. The symbol $\|..\|$ means here the 2-norm of a matrix. For a PSA or a PSG consisting of passive optical components, such as linear polarizers and linear retarders, the maximum value of the condition number of the matrices related to said PSA or PSG is equal to $1/\sqrt{3}$ if the 2-norm is used. Some authors use the Frobenius norm instead, which leads to an optimal value of $1/\sqrt{20}$. Although in what follows the 2-norm definition will be used, analogous results could be obtained based on the Frobenius norm.

It is also known from M.R. Foreman et al, in the article "On the equivalence of optimization metrics in Stokes polarimetry", Opt. Eng 58, 082410 (2019), that when the condition number of a matrix is maximized, the corresponding determinant is also maximized. Since the determinant of the matrix, A of a given PSA, or that of the matrix, W of a given PSG, is proportional to the volume of the corresponding polyhedron represented in the framework of the Poincare sphere, then, maximizing the condition number of said matrix A, or the condition number of said matrix W, is equivalent to a maximization of the volume of the corresponding polyhedron in the Poincare sphere.

M.R. Foreman et al, in the article "Optimal Frames for Polarization State Reconstruction", Phys. Rev. Lett. 115, 263901 (2015), shows that the maximization of the condition number of a matrix representing either a PSG or a PSA, can be achieved when the points in the Poincaré sphere corresponding to the Stokes vectors in said matrix, constitute a "spherical 2 design". P. Delsarte et al, in the article "Spherical codes and designs", Geometriae Dedicata 6, 363 (1977), and Y. Mimura, in the article "A construction of spherical 2-design", Graphs Combi. Vol. 6 369 (1990), describe a spherical 2 design as a collection of m points located on the surface of a sphere for which the integral of any polynomial of degree 2 or less of the coordinates of such m points, is equal to the average of such polynomials taken over such m points.

It is known from P.S Hauge, in the article "Recent developments in instrumentation in ellipsometry", Surf. Sci. 96, 108 (1980), a polarimeter with rotating polarizers with or without a fixed retarder. The matrices W and A, respectively related to the PSG and the PSA, are characterized by a null condition number.

US7298480 and E. Garcia-Caurel et al, in the article "Mid-infrared Mueller ellipsometer with pseudo-achromatic optical elements," Appl. Opt. 54, 2776 (2015), show that for the particular case of a polarimeter with fixed polarizers and rotating retarders, the optimal retardation to maximize the condition number over a wide spectral range, must be equal to 132°+n·360° or 228°+n·360° respectively, with n being an integer.

A first problem related to the use of fixed polarizers is the need to use retarders with a special retardance equal to either 132°+n·360° or 228°+n·360°, as it imposes the fabrication of custom-made elements which unavoidably implies noticeable prize differences with respect to typical off-the-shelf retarders. Moreover, the need for such particular retardations reduces the number of components that an optical designer may use because not all manufacturers can provide custom-made retarders.

A second problem is the inherent chromatic dispersion of typical common waveplate retarders, like half waveplate retarders or quarter waveplates retarders. Therefore, when it comes to design a polychromatic polarimeter, a practical difficulty is to keep the optimal retardation of the retarders used in the polarimeter to the optimal value. The latter can be achieved using special retarders such as achromatic retarders or variable retarders. In any case, the use of such special and sometimes sophisticated retarders may imply an increase of prize and an operation complexity compared to typical off-the-shelf retarders.

Q. Zhao et al, in the article "Geometric optimization method for a polarization state generator of a Mueller matrix microscope", Opt. Lett. Vol. 46, 5631-5634 (2021), describes a division of amplitude polarimetric microscope, in which the PSG consists of a non-continuously rotating polarizer and a non-continuously rotating retarder with a fixed retardation of ninety degrees (90°), and in which the PSA consists of two polarization cameras, one of which is preceded by one fixed retarder with a retardation equal to ninety degrees (90°). The polarimetric microscope works with a monochromatic radiation beam. In such polarimetric microscope, the PSA implements eight polarization analysis configurations. Such polarimetric microscope is sub-optimal in terms of condition number because the retardation of the retarders in both the PSG and the PSA does not meet the optimization criteria defined by D.S. Sabatke in Opt. Lett. 25, 802-804 (2000) previously cited.

## Summary of the invention

The invention aims to improve polarimetric systems and to remedy to at least some of the deficiencies of the prior art identified above.

Exemplary embodiments of the invention relate to a system for the polarimetric characterization of a target, comprising:

- a polychromatic illumination source for emitting a polychromatic radiation light beam,
- downstream from said illumination source and upstream from said target, at least one polarization state generator including at least one rotatable polarizer and at least one rotatable retarder,
- downstream from said target, at least one polarization state analyser including at least one rotatable retarder and at least one rotatable polarizer,
- at least one detection system for measuring an intensity of the light beam downstream the at least one polarization state analyser.

The system is advantageously used for the polychromatic Mueller polarimetric characterization of a target.

By "Mueller polarimetric characterization" it is meant the determination of at least 3x3 coefficients of the Mueller matrix, preferably 3x4 coefficients of the Mueller matrix, and more preferably the 4x4 coefficients of the Mueller matrix.

The present invention allows the characterization of a sample by determining its Mueller matrix, which is a way to characterize the optical response of a sample. The system allows to do it with a polychromatic light, with radiation in a wide spectral range.

## System

The system may be configured to allow the light beam emerging from the polarization state generator to propagate through the target and then through the polarization state analyser, and/or to be reflected by the target and then propagate through the polarization state analyser, and/or to be scattered by the target and then propagate through the polarization state analyser.

Between the polarization state generator and the polarization state analyser, the system may thus comprise a sample holder, on which the target to be probed is mounted.

The system may comprise one or more optics, to define the size and the aperture of the beam, to direct the light beam from the illumination source through the polarization state generator, and/or from the polarization state generator into the target to be probed, and/or from the target through the polarization state analyser, and/or from the polarization state analyser to the detection system.

Reflecting and focusing optics may be set between the illumination source and the target according to the Köhler illumination scheme in order to create a spot of homogenous intensity and polarization on the surface of the target with a well-defined angle of incidence. Alternatively, reflecting and focusing optics may be set between the illumination source and the target according to the critical illumination scheme to create an image of the illumination source on the target surface with a well-defined angular aperture.

The system may also comprise a holder, between the polarization state generator and the polarization state analyser, for a reference sample, and/or another holder, between the sample holder and the polarization state analyser, for a reference sample. The reference samples may be introduced into the beam path during the calibration of the polarimeter and may be removed during normal operation.

Polychromatic illumination source

The illumination source may be an infrared source and/or a visible source and/or an ultraviolet source.

The illumination source may be configured to enable a user of the system to select a range of wavelengths of the outputted light beam. One particular example of the latter may be a range of wavelengths going from 400 nm to 1400 nm. A second example of the latter may be a range of wavelengths from 200 to 4000 nm.

As an alternative, the illumination source may be configured to select a discrete set of wavelengths thanks to the use of an appropriate filter downstream of a polychromatic light emitter.

The illumination source may also be configured to emit a monochromatic radiation light beam of a selected wavelength, or alternatively, the illumination may be configured to emit a set of wavelengths in a narrow spectral band, thanks to the use of an appropriate filtering system downstream of a polychromatic light emitter.

During the use of the system, at least a first set of measurements may be carried out at a first selected wavelength, and then at least a second set of measurements may be carried out at a second selected wavelength different from the first one. By "measurement at a given wavelength", one should understand that the radiation light beam impinging on the sample during the measurement has a narrow spectral band centred at said wavelength or that the radiation light beam is monochromatic at said wavelength.

Polarization state generator

The polarization state generator is preferably configured to maximize its condition number, meaning that the polarizers of the polarization state generator and the retarders of the polarization state generator have a set of preferred azimuthal orientations so that the condition number associated to the polarization state generator is higher than 0.1, preferably equal to $1/\sqrt{3}$ (2-norm) with an uncertainty less than 20%, preferably equal to $1/\sqrt{3}$ (2-norm) with an uncertainty less than 10%, more preferably equal to $1/\sqrt{3}$ (2-norm) with an uncertainty less than 1%.

This characteristic allows the polarization state generator to minimize the propagation of noise and error.

As discussed previously, the maximization of the condition number of a matrix representing a polarization state generator can be achieved when the points in the Poincaré sphere corresponding to the Stokes vectors in said matrix, constitute a "spherical 2 design".

Although in principle any of the infinite number of possible rotations of a particular spherical 2 design in a 3D space may be used in order to optimize the condition number of a polarization state generator, some rotations are more favourable than others when it comes to consider the sensitivity of the condition number to small misalignments of the azimuthal angles of the polarizer and the retarder implemented in a practical setup.

The more stable orientations of spherical 2 designs are those for which none of the vertices of the polyhedron is located either at the north pole, or, at the south pole of the Poincaré sphere. Preferably the more stable orientations of spherical 2 designs are those for which none of the vertices of the polyhedron is located either at the north pole, or, at the south pole of the Poincaré sphere, and for which the following expression, S = $\sum_i^N |1/\cos \Lambda_i|$ , reaches its minimum value with an uncertainty of 50% or less, preferably with an uncertainty of 30 % or less, more preferably with an uncertainty of 20 % or less, even more preferably those orientations for which the following expression, $S = \sum_i^N |1/\cos \Lambda_i|$ , reaches its minimum value with an uncertainty of 10% or less. In said expression, N is the number of vertices of the polyhedron, the symbol |..| represents the absolute value, and $\Lambda_i$ is the geodesic coordinate corresponding to the latitude of the i-th vertex of the polyhedron. For instance, the value of the merit function S is equal to infinite for an ill-oriented octahedron, whereas it is 7.348 for an optimally oriented octahedron.

At least one retarder, preferably all the retarders, of the polarization state generator may be linear retarders.

At least one retarder, preferably all the retarders, of the polarization state generator may be non-achromatic retarders.

A non-achromatic retarder is a retarder whose retardation is a function of the wavelength of the light beam. Usually, a non-achromatic retarder consists of at least one slide of an anisotropic material of a given thickness. As an illustrative example, the following non-exhaustive list of retarder types may be considered as non-achromatic retarders to the purposes of the present invention: true zero order retarders (they are made of a very thin slice of birefringent material and they provide a retardation below one wavelength), low-order retarders (they are generally made of a slice of a birefringent material thicker than that used for true zero-order retarders and they provide a retardation of a few wavelengths), multiple-order retarders (they are generally made of a slice of a birefringent material thicker than that used for low-order retarders and provide a retardation of more than a few wavelengths), and zero-order retarders which are generally made as a juxtaposition of at least two low order or two multiple order plates. It is to be understood that other types of retarders not explicitly mentioned here may be used to implement an instrument based in the present invention.

The manufacture of non-achromatic retarders is simpler than other types of retarders and therefore, non-achromatic retarders are cheaper.

The retardation of at least one retarder, preferably all the retarders, is preferably in the intervals [35° ; 140°]+n.360° or [220° ; 325°]+n.360°, n being an integer.

At least one retarder, preferably all the retarders, of the polarization state generator may be quarter wave plates or half wave plates or any other generally available plates that can be easily found in the market.

That allows to avoid noticeable prize increases for the fabrication of custom-made plates with desired retardation.

At least one polarizer, preferably all the polarizers, of the polarization state generator may be linear polarizers. As a variant, the at least one polarizer may be circular or elliptical. Linear polarizers are preferred to circular or elliptical polarizers, because their fabrication is simpler and therefore they are cheaper.

At least one polarizer, preferably all the polarizers, of the polarization state generator may be achromatic or non-achromatic.

The first polarizer and the first retarder of the polarization state generator may be mounted so as to able to be rotated independently of each other to different azimuthal angles.

By "first polarizer", it is to be understood the first polarizer following the direction of propagation of the light beam. If the polarization state generator comprises one single polarizer, the first polarizer is the single polarizer.

The use of more than one polarizer allows to enhance the polarization performances of the polarization state generator.

By "first retarder", it is to be understood the first retarder following the direction of propagation of the light beam. If the polarization state generator comprises one single retarder, the first retarder is the single retarder.

The working spectral range of the polychromatic Mueller polarimeter may be considerably enlarged with the use of more than one retarder in the polarization state generator.

Having independently rotatable polarizer and retarder allows the creation of an infinite number of polarization states.

The entrance and exit faces of at least one polarizer, preferably all the polarizers, and/or of at least one retarder, preferably all the retarders, of the polarization state generator may comprise an antireflection coating to minimize light insertion losses.

The polarization state generator may be constituted by a single polarizer and a single retarder mounted after the polarizer following the direction of propagation of the light beam.

The polarization state generator may alternatively comprise n polarizers and a single retarder. The second polarizer, the third polarizer till the $n^{th}$ polarizer may be mounted sequentially after the first polarizer following the direction of propagation of the light beam. The retarder may be mounted after the $n^{th}$ polarizer following the direction of propagation of the light beam.

The polarization state generator may alternatively be constituted by a single polarizer and two retarders mounted sequentially after the polarizer following the direction of propagation of the light beam.

The polarization state generator may alternatively comprise n polarizers and two retarders. The second polarizer, the third polarizer till the $n^{th}$ polarizer may be mounted sequentially after the first polarizer following the direction of propagation of the light beam. The retarders may be mounted sequentially after the $n^{th}$ polarizer following the direction of propagation of the light beam.

If the polarization state generator comprises more than one retarder, for example two retarders, the second retarder of the polarization state generator may be mounted so as to keep its axis perpendicular to that of the first retarder of the polarization state generator. Alternatively, the second retarder of the polarization state generator may be mounted so as to keep its axis parallel to that of the first retarder of the polarization state generator.

If the polarization state generator comprises more than one polarizer, for example n polarizers, the second polarizer, the third polarizer up to the nth polarizer may be mounted so as to keep their respective axes parallel to that of the first polarizer of the polarization state generator.

Polarization state analyser

The polarization state analyser is preferably configured to maximize its condition number, meaning that the polarizers of the polarization state analyser and the retarders of the polarization state analyser have a set of preferred azimuthal orientations so that the condition number associated to the polarization state analyser is higher than 0.1, preferably equal to $1/\sqrt{3}$ (2-norm) with an uncertainty less than 20%, preferably equal to $1/\sqrt{3}$ (2-norm) with an uncertainty less than 10%, more preferably equal to $1/\sqrt{3}$ (2-norm) with an uncertainty less than 1%.

This characteristic allows the polarization state analyser to minimize the propagation of noise and error.

As discussed previously, the maximization of the condition number of a matrix representing a polarization state analyser can be achieved when the points in the Poincaré sphere corresponding to the Stokes vectors in said matrix, constitute a "spherical 2 design".

Although in principle any of the infinite number of possible rotations of a particular spherical 2 design in a 3D space may be used in order to optimize the condition number of a polarization state analyser, some rotations are more favourable than others when it comes to consider the sensitivity of the condition number to small misalignments of the azimuthal angles of the polarizer and the retarder implemented in a practical setup.

The more stable orientations of spherical 2 designs are those for which none of the vertices of the polyhedron is located either at the north pole, or, at the south pole of the Poincaré sphere. Preferably the more stable orientations of spherical 2 designs are those for which none of the vertices of the polyhedron is located either at the north pole, or, at the south pole of the Poincaré sphere, and for which the following expression, $S = \sum_i^N |1/\cos \Lambda_i|$, reaches its minimum value with an uncertainty of 50% or less, preferably with an uncertainty of 30 % or less, more preferably with an uncertainty of 20 % or less, even more preferably those orientations for which the following expression, $S = \sum_i^N |1/\cos \Lambda_i|$, reaches its minimum value with an uncertainty of 10% or less. In said expression, N is the number of vertices of the polyhedron, the symbol |..| represents the absolute value, and $\Lambda_i$ is the geodesic coordinate corresponding to the latitude of the i-th vertex of the polyhedron. For instance, the value of the merit function S is equal to infinite for an ill-oriented octahedron, whereas it is 7.348 for an optimally oriented octahedron.

At least one retarder, preferably all the retarders, of the polarization state analyser may be linear retarders.

At least one retarder, preferably all the retarders, of the polarization state analyser may be non-achromatic retarders, which makes the retarder easier to manufacture.

The retardation of at least one retarder, preferably all the retarders, is preferably in the intervals [35°; 140°]+n.360° or [220°; 325°]+n.360° , n being an integer.

At least one retarder, preferably all the retarders, of the polarization state analyser may be quarter wave plates or half wave plates or any other plates that is generally available.

That allows to avoid noticeable prize increases for the fabrication of custom-made plates with desired retardation.

At least one polarizer, preferably all the polarizers, of the polarization state analyser may be linear polarizers. As a variant, the at least one polarizer may be circular or elliptical. As previously discussed, linear polarizers are preferred to circular or elliptical polarizers, since their fabrication is simpler and therefore they are cheaper.

At least one polarizer, preferably all the polarizers, of the polarization state analyser may be achromatic or non-achromatic.

The first polarizer and the first retarder of the polarization state analyser may be mounted so as to be able to be rotated independently of each other to different azimuthal angles.

By "first polarizer", it is to be understood the first polarizer following the direction of propagation of the light beam. If the polarization state analyser comprises one single polarizer, the first polarizer is the single polarizer.

The use of more than one polarizer allows to enhance the polarization performances of the polarization state analyser.

By "first retarder", it is to be understood the first retarder following the direction of propagation of the light beam. If the polarization state analyser comprises one single retarder, the first retarder is the single retarder.

The working spectral range of the polychromatic Mueller polarimeter may be considerably enlarged with the use of more than one retarder in the polarization state analyser.

Having independently rotatable polarizer and retarder allows the creation of an infinite number of analysis configurations.

The entrance and exit faces of at least one polarizer, preferably all the polarizers, and/or of at least one retarder, preferably all the retarders, of the polarization state analyser may comprise an antireflection coating to minimize light insertion losses.

The polarization state analyser may be constituted by a single polarizer and a single retarder mounted before the polarizer following the direction of propagation of the light beam.

The polarization state analyser may alternatively comprise m polarizers and a single retarder. The second polarizer, the third polarizer till the mth polarizer may be mounted sequentially after the first polarizer following the direction of propagation of the light beam. The retarder may be mounted before the first polarizer following the direction of propagation of the light beam.

The polarization state analyser may alternatively be constituted by a single polarizer and two retarders mounted sequentially before the polarizer following the direction of propagation of the light beam.

The polarization state analyser may alternatively comprise m polarizers and two retarders. The second polarizer, the third polarizer till the mth polarizer may be mounted sequentially after the first polarizer following the direction of propagation of the light beam. The retarders may be mounted sequentially before the first polarizer following the direction of propagation of the light beam.

If the polarization state analyser comprises more than one retarder, for example two retarders, the second retarder of the polarization state analyser may be mounted so as to keep its axis perpendicular to that of the first retarder of the polarization state analyser. Alternatively, the second retarder of the polarization state analyser may be mounted so as to keep its axis parallel to that of the first retarder of the polarization state analyser.

If the polarization state analyser comprises more than one polarizer, for example m polarizers, the second polarizer, the third polarizer up to the mth polarizer may be mounted so as to keep their respective axes parallel to that of the first polarizer of the polarization state analyser.

Detection system

The detection system may be configured to measure the intensity of the light beam during periods of non-rotation of the retarders and/or of the polarizers of the polarization state generator, and/or the detection system may be configured to measure the intensity of the light beam during periods of non-rotation of the retarders and/or of the polarizers of the polarization state analyser, meaning that the detection system may be configured to measure the intensity of the light while the retarders and/or the polarizers of the polarization state generator rotates in a stepping mode, and/or while the retarders and/or the polarizers of the polarization state analyser rotates in a stepping mode.

That avoids many post detection calculations that would have to be done if the detection system was configured to measure the intensity of the light beam with the retarders and/or the polarizers of the polarization state generator continuously rotating, and/or the retarders and/or the polarizers of the polarization state analyser continuously rotating.

The detection system may be configured to measure sequentially the intensity of a plurality of wavelengths of the light beam or to measure simultaneously the intensity of a plurality of wavelengths of the light beam or to measure simultaneously and separately the intensity of a plurality of wavelengths of the light beam.

The detection system may be a polychromatic camera, such as a tri-CCD or tri-CMOS camera or a hyperspectral camera or another type of focal-plane array (FPA) of independent radiation-intensity sensing pixels. The detection system may also be a spectrometer. Alternatively, the detection system may be a combination of any of the previous.

Method

Exemplary embodiments of the invention also relate to a method for the polychromatic polarimetric characterization of a target, preferably for generating a Mueller matrix of the target, more preferably a 4 by 4 Mueller matrix, the method comprising:

- generating a polychromatic radiation light beam,
- directing the light beam through at least one polarization state generator, the latter including at least one rotatable polarizer and at least one rotatable retarder, for instance one or two rotatable retarders,
- directing the light beam emerging from the polarization state generator toward the target,
- directing the light beam transmitted by, reflected by and/or scattered by the target through at least one polarization state analyser, the latter including at least one rotatable retarder, for instance one or two rotatable retarders, and at least one rotatable polarizer,
- detecting spectrally resolved intensities of the light beam downstream of the polarization state analyser for various states of the polarization state generator and the polarization state analyser to generate said characterization.

The method preferably comprises the polarization state generator being set such that its condition number is higher than 0.1, preferably equal to $1/\sqrt{3}$ (2-norm) with an uncertainty less than 20%, preferably equal to $1/\sqrt{3}$ (2-norm) with an uncertainty less than 10%, more preferably equal to $1/\sqrt{3}$ (2-norm) with an uncertainty less than 1%, and/or the polarization state analyser being set such that its condition number is higher than 0.1, preferably equal to $1/\sqrt{3}$ (2-norm) with an uncertainty less than 20%, preferably equal to $1/\sqrt{3}$ (2-norm) with an uncertainty less than 10%, more preferably equal to $1/\sqrt{3}$ (2-norm) with an uncertainty less than 1%.

The method may include:

- choosing a discrete set of at least four distinct polarization states, by rotating the first polarizer of the polarization state generator to at least four distinct azimuthal angles, and by rotating the first retarder of the polarization state generator to at least four distinct azimuthal angles,
- recording for each polarization state generated by the polarization state generator, the intensity of the light beam downstream of the polarization state analyser.

The retarders of the polarization state generator may be non-achromatic, therefore the set of azimuthal angles of the first polarizer of the polarization state generator and of the first retarder of the polarization state generator are preferably adapted for each wavelength of the light beam to obtain the optimal value, $1/\sqrt{3}$ (2-norm), of the condition number.

If in a given spectral range, the azimuthal angles of the first polarizer of the polarization state generator and of the first retarder of the polarization state generator do not strongly depend on the wavelength, a spectrally averaged value may be advantageously set for these azimuthal angles independently of the wavelength used, provided that the condition number is kept higher than 0.1, or close, preferably within 20%, to the optimal value $1/\sqrt{3}$ (2-norm).

The method may also include:

- choosing a discrete set of at least four distinct analysis configurations, by rotating the first polarizer of the polarization state analyser to at least four distinct azimuthal angles, and by rotating the first retarder of the polarization state analyser to at least four distinct azimuthal angles,
- recording for each analysis configuration generated by the polarization state analyser, the intensity of the light beam downstream of the polarization state analyser.

The retarders of the polarization state analyser may be non-achromatic, therefore the set of azimuthal angles of the first polarizer of the polarization state analyser and of the first retarder of the polarization state analyser are preferably adapted for each wavelength of the light beam to obtain the optimal value, $1/\sqrt{3}$ of the condition number.

If in a given spectral range, the azimuthal angles of the first polarizer of the polarization state analyser and of the first retarder of the polarization state analyser do not strongly depend on the wavelength, a spectrally averaged value may be advantageously set for these azimuthal angles independently of the wavelength used, provided that the condition number is kept higher than 0.1, or close, preferably within 20%, to the optimal value $1/\sqrt{3}$ (2-norm).

The method may include, when the polarization state generator comprises more than one retarder, for example two retarders, keeping the optic axis of the second retarder either parallel or perpendicular to the optic axis of the first retarder.

The method may include, when the polarization state analyser comprises more than one retarder, for example two retarders, keeping the optic axis of the second retarder either parallel or perpendicular to the optic axis of the first retarder.

The method may include, when the polarization state generator comprises more than one polarizer, the rotations of the second polarizer, the third polarizer, till the nth polarizer, being done in a way to keep parallel the transmission axis of the second polarizer, the third polarizer, till the nth polarizer, with respect to that of the first polarizer.

The polarizers of the polarization state generator may be fixedly mounted on a same support, preferably with their transmission axes parallel, and the support may be rotatable thanks for example to a motorized drive.

The method may include, when the polarization state analyser comprises more than one polarizer, the rotations of the second polarizer, the third polarizer, till the mth polarizer, being done in a way to keep parallel the transmission axis of the second polarizer, the third polarizer, till the mth polarizer, with respect to that of the first polarizer.

The polarizers of the polarization state analyser may be fixedly mounted on a same support, preferably with their transmission axes parallel, and the support may be rotatable thanks for example to a motorized drive.

The method preferably includes a calibration protocol of the polychromatic polarimeter, like the Eigenvalue calibration method described by E. Compain in the article "General and Self-consistent Method for the Calibration of Polarization Modulators, Polarimeters, and Mueller-Matrix Ellipsometers." Appl. Opt. 38, 3490 (1999), or the Polarizer calibration method described by R. Ossikovski in the article "Polarizer calibration method for Mueller matrix polarimeters", Appl. Opt. 59, 10389 (2020).

**Brief description of the figures**

Figure 1 is a partial and schematic view of a first example of a polychromatic Mueller polarimeter system made in accordance with the invention,

Figure 2 is a scheme of the azimuthal orientation $\varphi$ of a polarizer made in accordance with the invention,

Figure 3 is a scheme of the azimuthal orientation $\theta$ of a retarder made in accordance with the invention,

Figure 4 is a graphic showing the condition number that can be reached with the polarization state generator of the system of Figure 1, as a function of the retardation of the retarder of the polarization state generator,

Figure 5 is a graphic showing the spectral dependence of the retardation of the retarder of the polarization state generator of Figure 1(solid line) and the maximum and minimum limits of the retardation range within which an optimal condition number can be reached (dotted lines),

Figure 6A is a graphic showing the spectral dependence of the azimuthal angles of the polarizer of the polarization state generator of Figure 1,

Figure 6B is a graphic showing the spectral dependence of the azimuthal angles of the retarder of the polarization state generator of Figure 1,

Figure 7 is a graphic showing the spectral dependence of the best condition number that can be reached by the polarization state generator of Figure 1, the 20% variation limit with respect to the optimal value (dot-dashed line), and the minimum value for practical measurements (dotted line),

Figure 8A is a graphic that represents a Poincaré sphere projected in a plane according to the Mollweide model, four curves corresponding to polarization states and four vertices of a regular tetrahedron associated with an optimal value of the condition number (dots),

Figure 8B is another graphic that represents a Poincaré sphere projected in a plane according to the Mollweide model, four curves corresponding to polarization states different from the polarization states of Figure 8A and four vertices of a regular tetrahedron associated with an optimal value of the condition number (dots),

Figure 9A is a graphic showing the location in a Poincaré sphere of six states of polarization corresponding to an optimally oriented regular octahedron,

Figure 9B is a graphic showing the spectral dependence of the best condition number that can be reached by the polarization state generator of Figure 1 set to match the vertices of the octahedron represented in Figure 9A, the 20% variation limit with respect to the optimal value (dot-dashed line), and the minimum value for practical measurements (dotted line),

Figure 9C is a graphic showing the location in a Poincaré sphere of six states of polarization corresponding to a non-optimally oriented regular tetrahedron,

Figure 9D is a graphic showing the spectral dependence of the best condition number that can be reached by the polarization state generator of Figure 1 set to match the vertices of the octahedron represented in Figure 9C, the 20% variation limit with respect to the optimal value (dot-dashed line), and the minimum value for practical measurements (dotted line),

Figure 10 is a partial and schematic view of another example of a polychromatic Mueller polarimeter system made in accordance with the invention,

Figure 11 is a partial and schematic view of another example of a polychromatic Mueller polarimeter system made in accordance with the invention,

Figure 12A is a graphic showing the spectral dependence of the retardation of the two retarders of the polarization state generator of the embodiment of Figure 11,

Figure 12B is a graphic showing the spectral dependence of the retardation of the equivalent retarder of the polarization state generator of Figure 11 and the maximum and minimum limits of the retardation range within which an optimal condition can be reached (dotted lines),

Figure 13A is a graphic showing the spectral dependence of the azimuthal angles of the polarizer of the polarization state generator of Figure 11,

Figure 13B is a graphic showing the spectral dependence of the azimuthal angles of the first retarder of the polarization state generator of Figure 11,

Figure 14 is a graphic showing the spectral dependence of the best condition number that can be reached by the polarization state generator of Figure 11, the 20% variation limit with respect to the optimal value (dot-dashed line) and the minimum value for practical measurements (dotted line),

Figure 15 is a partial and schematic view of another example of a polychromatic Mueller polarimeter system made in accordance with the invention,

Figure 16 is a graphic showing a comparison between the spectral dependence of the condition number of a polarization state generator operating according to the rotating retarder/rotating polarizer configuration and the spectral dependence of the condition number of an equivalent polarization state generator operating according to the rotating retarder/fixed polarizer configuration. The dotted line shows the minimum value for practical measurements.

### Detailed description of the figures

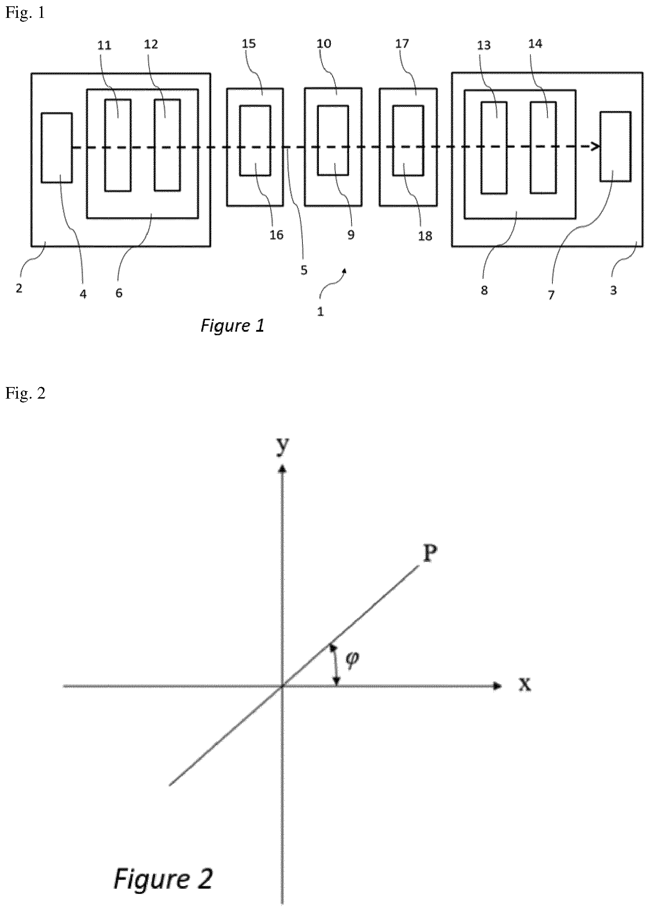

Figure 1 shows a polychromatic Mueller polarimeter 1 divided in two arms, an illumination arm 2 and a detection arm 3. The illumination arm 2 contains a polychromatic radiation source 4, producing a polychromatic radiation light beam 5 with a continuous or a discrete distribution of wavelengths comprised for example in the range between 400 nm and 1400 nm, and a polarization state generator 6. The radiation source may be equipped with a means to produce the wavelengths in said beam either sequentially or simultaneously. The detection arm 3 contains a detector 7 capable of detecting the intensity of a polychromatic radiation light beam in a spectral range ranging for example from 400 nm to 1400 nm, and a polarization state analyser 8. Between the illumination arm 2 and the detection arm 3 there is the sample to be probed 9, mounted in a sample holder 10.

The polarimeter 1 may also contain a number of reflecting and focusing optics in the illumination arm 2 and in the detection arm 3 in order to define the size and the aperture of the beam 5. Said reflecting and focusing optics also direct the beam 5 from the source 4 through the polarization state generator 6 to the sample to be probed 9 and, from the sample 9 through the polarization state analyser 8 to the detector 7.

Said reflecting and focusing optics in the illumination arm 2 may be set according to the Köhler illumination scheme in order to create a spot of homogenous intensity and polarization on the surface of the sample 9 with a well-defined angle of incidence. Alternatively, said reflecting and focusing optics in the illumination arm 2 may be set according to the critical illumination scheme to create an image of the radiation source 4 on the sample 9 surface with a well-defined angular aperture.

Although Figure 1 outlines the scheme of a polarimeter 1 mounted in transmission configuration, the polarimeter in the disclosed invention may be mounted in reflection configuration, scattering configuration or any combination of the said three configurations.

The polarization state generator 6 may consist as shown, of one rotatable polarizer 11 and one rotatable retarder 12, the retarder 12 being mounted after the polarizer 11 along the direction of propagation of the light beam 5, the retarder 12 and the polarizer 11 being able to be rotated independently of each other.

The polarization state analyser 8 may consist as shown in one rotatable retarder 13 and one rotatable polarizer 14, the polarizer 14 being mounted after the retarder 13 along the direction of propagation of the light beam 5, the retarder 13 and the polarizer 14 being able to be rotated independently of each other.

Between the sample holder 10 and the polarization state generator 6 there may be a holder 15 for reference samples 16, these samples 16 being introduced into the beam path 5 during the calibration of the instrument and then removed during normal operation. Analogously, between the sample holder 10 and the polarization state analyser 8 there may be a holder 17 for reference samples 18, these samples 18 being introduced into the beam path 5 during the calibration of the instrument and then removed during normal operation.

To work with radiation at different wavelengths, the polychromatic polarimeter 1 may be equipped by a means, such as a spectrometer or a spectral filter wheel, to filter and to select the wavelength of the light beam 5 used to probe the sample 9. Such means may be installed either in the illumination arm 2 somewhere between the radiation source 4 and the polarization state generator 6, or, in the detection arm 3, somewhere between the polarization state analyser 8 and the sample 9. In the absence of a said means to filter and to select the wavelength of the light beam 5, the source of radiation 4 itself may include the necessary means to control the wavelength of the radiation emitted by it.

The orientation of the polarizer 11 or 14, either in the polarization state generator 6 or in the polarization state analyser 8 respectively, may be positioned to a discrete set of azimuthal angles $\varphi$, the azimuthal angle $\varphi$ being the resulting angle between the transmission axis P of the polarizer 11 or 14, and the reference axis of the laboratory or the polarimeter 1 after a discrete rotation of the polarizer 11 or 14, as shown in Figure 2.

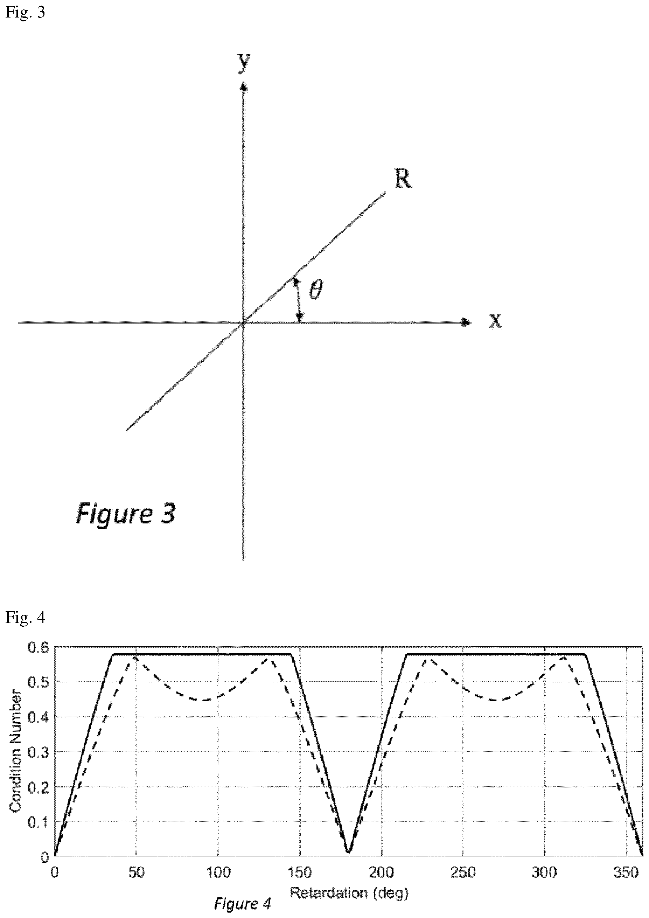

For each azimuthal angle $\varphi$ of the polarizer 11 or 14, either in the polarization state generator 6 or in the polarization state analyser 8, an infinite number of polarization states or analysis configurations may be set, when the axis R of the corresponding retarder 12 or 13, is rotated between 0° and 360° at an infinite number of azimuthal angles $\theta$, as shown in Figure 3.

The matrices W and A, representing the polarization states generated by the polarization state generator 6 and the polarization analysis configurations created by the polarization state analyser 8 respectively, are optimized in terms of their condition number, which is approximately equal to the optimal value of $1/\sqrt{3}$, which is the maximum achievable with passive optical elements. Figure 4 shows that the condition number, either of the matrix W or of the matrix A, may be maximized in the intervals of retardation of the retarders, 35° to 140° and 220° to 325°, thanks to the fact that the polarizers 11 and 14, and the analysers 12 and 13, may be orientated to any azimuthal angles $\varphi$ and $\theta$, between 0° and 360°.

The retarders 12 and 13 of the polarization state generator 6 and the polarization state analyser 8 may be non-achromatic, therefore the set of angles $\varphi$ and $\theta$ are preferably adapted for each wavelength of the light beam 5 to obtain the optimal value $1/\sqrt{3}$ (2-norm) of the condition number, as shown in Figure 4 (solid line).

If in a given spectral range, the azimuthal angles $\varphi$ and $\theta$ do not strongly depend on the wavelength, a spectrally averaged value may be set for such azimuthal angles $\varphi$ and $\theta$ independently of the wavelength used, provided that the condition number is kept higher than 0.1, or close, preferably within 20%, to the optimal value $1/\sqrt{3}$ (2-norm), as shown in Figure 4 (dashed line).

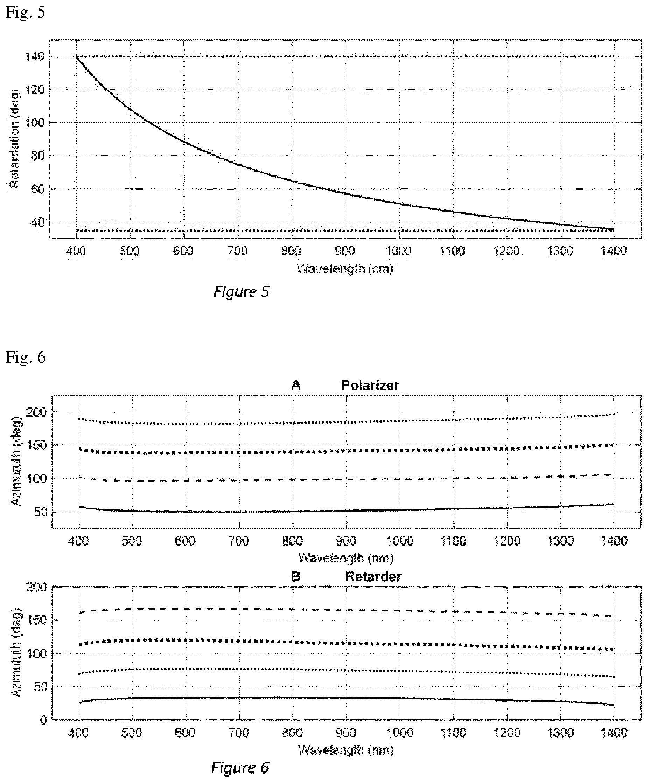

The retarder 12 of the polarization state generator 6 is for example, a zero-order quartz retarder, specified to be quarter wave plate at 590 nm, this retarder being easy to produce at competitive prizes. Figure 5 shows the typical retardation of this retarder in the spectral range from 400 nm to 1400 nm, varying between 35° and 140°.

The number of polarization states generated by the polarization state generator 6 may be equal to four, and the number of analysis configurations created by the polarization state analyser 8 may be also equal to four. The use of only four polarization states and four analysis configurations to operate the polarimeter has the advantage of minimizing the amount of measurements, and therefore the time, required to complete a full measurement.

Figure 6A shows the spectral dependence, in the range from 400 nm to 1400 nm, of four azimuthal angles $\varphi$ of the polarizer 11 in the polarization state generator 6, needed to reach the optimal condition if the retarder is the quartz plate, specified to be quarter wave plate at 590 nm. The value of the azimuthal angles $\varphi$ of the polarizer 11 used to create each one of the corresponding four polarization states, scarcely varies with the wavelength of the light beam 5 within the spectral range considered. In average, the value of the azimuthal angle $\varphi$ of the polarizer 11 generating the first, second, third and fourth polarization states, are 52.6°, 99°, 141° and 185.3° respectively.

The four azimuthal angles $\varphi$ of the polarizer 11 given previously are examples used to create four polarization states. Any other values could be chosen for the four azimuthal angles $\varphi$ of the polarizer 11.

Figure 6B shows the spectral dependence of the corresponding azimuthal angles $\theta$ of the retarder 12 required to reach an optimal condition number. Said angles are valid for a retarder being a quartz plate specified to be quarter wave plate at 590 nm. As for the polarizer, the values of the azimuthal angles $\theta$ of the retarder 12 in the polarization state generator 6 do not considerably change within the spectral range considered. In average, the value of the azimuthal angle $\theta$ of the retarder 12 needed to generate the first, second, third and fourth polarization states, given the azimuthal angles $\varphi$ of the polarizer 11, are 32°, 164°, 114.4° and 73.7° respectively.

As the four azimuthal angles $\theta$ of the retarder 12 depend on the four azimuthal angles $\varphi$ of the polarizer 11 to reach the optimal condition, if the polarizer 11 had different azimuthal angles $\varphi$, then the azimuthal angles $\theta$ of the retarder 12 would be different too. If the retarder had a different nominal retardation, then the azimuthal angles $\varphi$ of the polarizer 11 and the corresponding azimuthal angles $\theta$ of the retarder 12 would be different of these given here as an illustrative example.

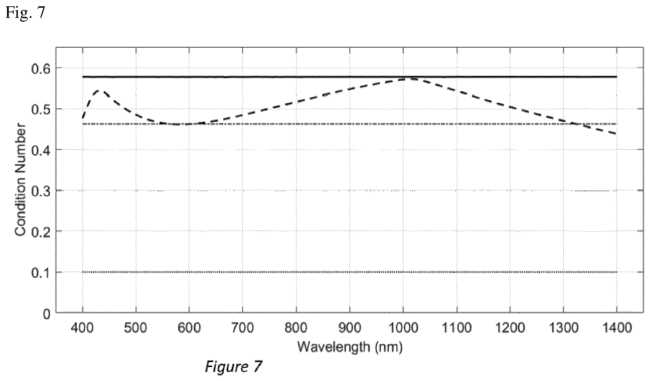

Figure 7 shows that, within the spectral range from 400 to 1400 nm, the condition number associated to the matrix W reaches the theoretical optimal value of

$$1/\sqrt{3}$$

if the optimized set of azimuthal angles $\varphi$ and $\theta$ of the polarizer 11 and the retarder 12 respectively are used for each wavelength (solid line). The latter means that the polarization state generator 6 is optimal in terms of reducing noise and error propagation. The dot-dashed line at 0.46 is the 20% variation limit with respect to the optimal value of $1/\sqrt{3}$ and the dotted line at 0.1 is the minimum value for practical measurements. Figure 7 also shows that if a spectral average of the optimal azimuthal angles $\varphi$ and $\theta$ of the polarizer 11 and the retarder 12 respectively are used, the condition number, albeit not optimal for all the wavelengths, is close, within an interval of 20%, to the optimal value of $1/\sqrt{3}$ (dashed line).

The polarization state analyser 8 may consist of the same elements for the polarizer 14 and the retarder 13 as the polarization state generator 6, a quartz retarder set to create a retardation of 90° at 590 nm, both set to the same combination of azimuthal angles $\varphi$ and $\theta$, and may then give the same results, meaning being optimal in terms of noise propagation within the spectral range of the radiation source 4.

As there are four polarization states and four analysis configurations in the example, the corresponding matrices W and A, are square and of dimension four. Moreover, the polyhedrons in the Poincaré sphere defined by the Stokes vectors associated to the matrix W and the Stokes vectors associated to the matrix A respectively are both regular tetrahedrons, regular tetrahedrons being spherical 2 designs.

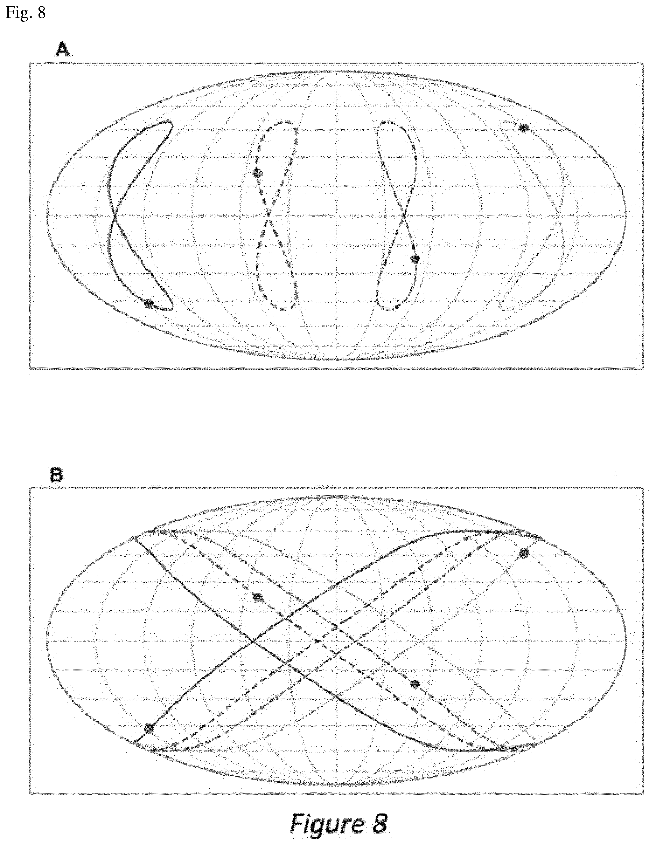

In Figure 8A, an example of four polarization states generated by a polarization state generator, and a Poincaré sphere for a given wavelength are represented. The polarization state generator used in this example comprises one rotatable polarizer and one rotatable retarder according to the present invention with retardation equal to 50°. In the case of the retarder in Figure 5, a retardation of 50° is achieved at 1070 nm. The four polarization states correspond to four azimuthal angles, respectively ±69°, and ±21° of the polarizer. For each one of the four azimuthal angles of the polarizer, the retarder can be rotated between 0° and 360°, such that the four polarization states plotted in the framework of a Poincaré sphere describe four curves, all identical to each other, showing a 'number eight' shape, but shifted along the longitude geodesic coordinate on the Poincaré sphere, according to the corresponding azimuthal angle of the polarizer. The four points represented in Figure 8A correspond to the vertices of a regular tetrahedron related to an optimal condition number of the polarization state generator.

In Figure 8B, another example of four polarization states generated by a polarization state generator and a Poincaré sphere for a given wavelength are represented. The polarization state generator used in this example comprises one rotatable polarizer and one rotatable retarder according to the present invention with retardation equal to 120°. In the case of the retarder in Figure 5, a retardation of 120° is achieved at 460 nm. The four polarization states correspond to four azimuthal angles, respectively ±26°, and ±6° of the polarizer. For each one of the four azimuthal angles of the polarizer, the retarder can be rotated between 0° and 360°, such that the four polarization states plotted in the framework of a Poincaré sphere describe four curves, all identical to each other, showing a 'letter X' shape, but shifted along the longitude geodesic coordinate on the Poincaré sphere, according to the corresponding azimuthal angle of the polarizer. The four points represented in Figure 8B correspond to the vertices of a regular tetrahedron related to an optimal condition number of the polarization state generator.

Figures 8A and 8B show two examples for which the retarder shows low and high retardation respectively, close to the boundaries within which the condition number may be optimized to $1/\sqrt{3}$ (2-norm). Between the two examples shown, there is a monotonous and continuous transformation of the curves, as well as the optimization azimuthal angles, from one to the other. These two examples illustrate the versatility of the method to achieve optimal sets of polarization states with a polarization state generator. The key point that makes possible such versatility is the possibility to rotate the polarizer at any azimuthal angle, allowing to reach an optimal configuration of the polarization state generator, with a retarder with any arbitrary retardation between the limits shown in Figure 4 and Figure 5, by an adequate selection of the azimuthal angle of the retarder.

The method for generating a Mueller matrix of the sample 9 with the polychromatic Mueller polarimeter 1 of Figure 1, may comprise:

- generating a polychromatic radiation light beam 5 with a continuous or a discrete distribution of wavelengths comprised in the range between 400 nm and 1400 nm,
- directing the light beam 5 through the polarization state generator 6 being set such that its condition number is as close as possible to $1/\sqrt{3}$ (2-norm),
- directing the light beam emerging from the polarization state generator 6 toward the sample 9,
- directing the light beam transmitted by the sample 9 through the polarization state analyser 8 set such that its condition number is as close as possible to $1/\sqrt{3}$ (2-norm),
- detecting spectrally resolved intensities of the light beam 5 downstream of the polarization state analyser 8 to generate the characterization of the sample, for four polarisation states created by the polarization state generator 6 and four analysis configurations set by the polarization state analyser 8, during periods of time when the polarizers 11 and 14, and the retarders 12 and 13, are kept still.

The method for generating a Mueller matrix of the sample 9 with the polychromatic Mueller polarimeter 1 of Figure 1 may also include:

- choosing a discrete set of four different polarization states by rotating the polarizer 11 of the polarization state generator 6 to preferably four different azimuthal angles $\varphi$, and by rotating the retarder 12 of the polarization state generator 6 to preferably four different azimuthal angles $\theta$ to create different polarization states,
- choosing a discrete set of four different analysis configurations by rotating the polarizer 14 of the polarization state analyser 8 to preferably four different azimuthal angles $\varphi$, and by rotating the retarder 13 of the polarization state analyser 8 to preferably four different azimuthal angles $\theta$ to create different analysis configurations,
- recording for each polarization state generated by the polarization state generator 6 and each analysis configurations generated by the polarization state analyser 8, the intensity of the light beam 5 downstream of the polarization state analyser 8.

The azimuthal angles $\varphi$ and $\theta$ of the polarizer 14 and the retarder 13 respectively, chosen to create the four analysis configurations, may be different from the azimuthal angles $\varphi$ and $\theta$ of the polarizer 11 and the retarder 12 respectively, chosen to create the four polarization states. Alternatively, the azimuthal angles $\varphi$ and $\theta$ of the polarizer 14 and the retarder 13 respectively, chosen to create the four analysis configurations, may be the same as the azimuthal angles $\varphi$ and $\theta$ of the polarizer 11 and the retarder 12 respectively, chosen to create the four polarization states.

The four column Stokes vectors corresponding to the four polarization states generated by the polarization state generator 6 are represented in a square matrix W of dimension 4. The four row Stokes vectors corresponding to the four polarization analysis configurations set by the polarization state analyser 8 are represented in square matrix A of dimension four.

The number of measurements required to determine a full Mueller matrix for each wavelength of the light beam 5 is sixteen, and the measurements are ordered in a square matrix B. With W and A the matrices representing the polarization states and the analysis configurations respectively, the Mueller matrix of the probed sample 9 may be obtained with the equation:

$$M = A^{-1}BW^{-1}$$

Before using the polychromatic polarimeter to probe the sample 9, the matrices W and A may be determined using a calibration protocol.

The embodiment described previously is provided for illustrative purposes only. Therefore, the characteristics of this embodiment, such as for instance, the cited spectral range, the type and characteristics of the polarizer and retarder used in the polarization state generator and the polarization state analyser, the number of polarization state generators and polarization state analysers in the polarimeter, the transmission configuration described, or the number of polarizers or retarders in either the polarization state generator or the polarization state analyser, may vary without departing from the scope of the present invention.

In an alternative embodiment, the polarization state generator may generate a number N greater than four of polarization states, the corresponding matrix W being of dimension 4xN, and/or the polarization state analyser may set a number M greater than four of analysis configurations, the corresponding matrix A being of dimension Mx4. In that case, the number of measurements required to determine a Mueller matrix would be MxN.

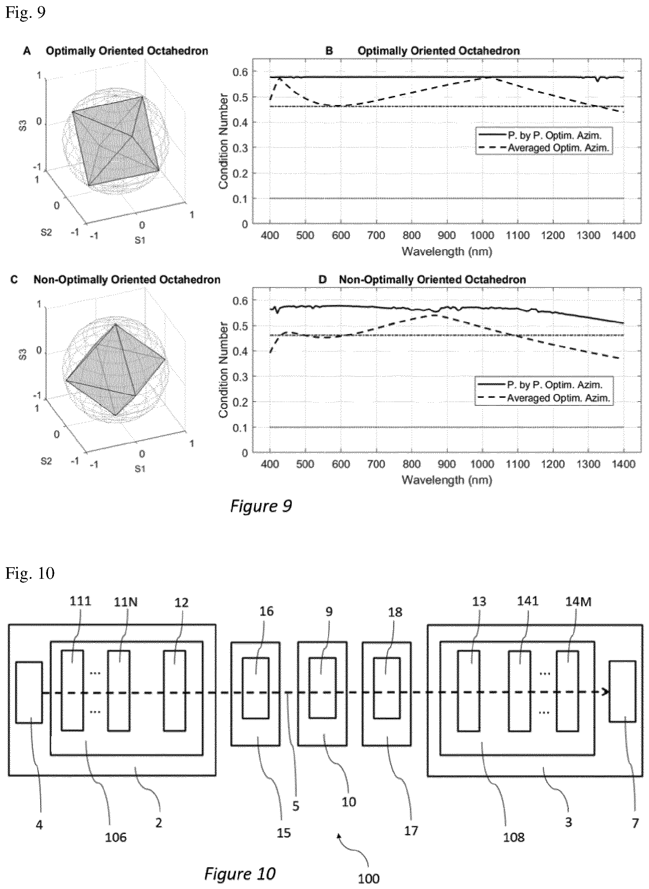

As an example, Figure 9A shows the location of six Stokes vectors in a Poincaré sphere corresponding to the vertices of a regular octahedron. Figure 9B shows the spectral dependence of the condition number of the matrix W or the matrix A associated to these six Stokes vectors, related to a polarization state generator or a polarization state analyser respectively, consisting of a rotatable linear polarizer and a rotatable linear retarder. The retarder used for the example in Figure 9B is a quartz linear waveplate specified to be quarter wave plate at 590 nm. The graphic in Figure 9B shows that the condition number associated to such polarization state generator or polarization state analyser, reaches the optimal value of $1/\sqrt{3}$ (2-norm) in the spectral range from 400 to 1400 nm, if the azimuthal angles $\varphi$ and $\theta$ of the polarizer and the retarder respectively are optimized for each wavelength within the working spectral range (solid line). The same graphic in Figure 9B shows that if a spectral average of the optimal azimuthal angles $\varphi$ and $\theta$ of the polarizer and the retarder respectively are used, the condition number, albeit not optimal for all the wavelengths, is close within an interval of 20% to the optimal value of $1/\sqrt{3}$ (2-norm, dashed line).

Figure 9B and Figure 7 show that the condition number associated to either a polarization state generator, or a polarization state analyser, consisting of a rotatable linear polarizer and a rotatable linear retarder, may be optimal in a wide spectral range if the azimuthal angles $\varphi$ and $\theta$ of the polarizer and the retarder are properly selected in order to generate states forming a spherical 2 design when represented in a Poincaré sphere.

Although in principle any of the infinite number of possible rotations of a particular spherical 2 design in a 3D space may be used in order to optimize the condition number of a polarization state generator or a polarization state analyser, some rotations are more favourable than others when it comes to consider the sensitivity of the condition number to small misalignments of the azimuthal angles of the polarizer and the retarder implemented in a practical setup.

The more stable orientations of spherical 2 designs are those for which none of the vertices of the polyhedron is located either at the north pole, or, at the south pole of the Poincaré sphere. Preferably the more stable orientations of spherical 2 designs are those for which none of the vertices of the polyhedron is located either at the north pole, or, at the south pole of the Poincaré sphere, and for which the following expression, S =

$\sum_{i}^{N} |1/\cos \Lambda_i|$ , reaches its minimum value with an uncertainty of 50% or less, preferably with an uncertainty of 30 % or less, more preferably with an uncertainty of 20 % or less, even more preferably those orientations for which the following expression, $S = \sum_{i}^{N} |1/\cos \Lambda_i|$

, reaches its minimum value with an uncertainty of 10% or less. In said expression, N is the number of vertices of the polyhedron, the symbol |..| represents the absolute value, and $\Lambda_i$ is the geodesic coordinate corresponding to the latitude of the i-th vertex of the polyhedron.

As an example, Figure 9A and Figure 9B show both a regular octahedron. The octahedron in Figure 9A is oriented in a way that none of its vertices is at the poles of the Poincaré sphere, whereas the octahedron in Figure 9C has four vertices at the equator of the Poincaré sphere, one vertex at the north pole and one vertex at the south pole. The octahedron in Figure 9A is optimally oriented because the value of the merit function S previously defined, reaches a minimum value equal to 7.348. Figure 9D shows the best condition number that can be achieved when optimizing the azimuthal angles $\varphi$ and $\theta$ of the polarizer and the retarder respectively, of either a polarization state generator or a polarization state analyser, consisting of a rotating linear polarizer and a rotating linear retarder, according to the spherical 2 design shown in Figure 9C. The retarder considered here is a quartz waveplate specified to be quarter wave plate at 590 nm. Due to the non-optimal orientation of the corresponding octahedron, the condition number reaches an optimal value within a spectral range between 400 and 900 nm. Beyond 900 nm the value of the condition number monotonically decreases down to 0.38 at 1400 nm. A comparison between Figures 9B and 9D shows that a well-oriented octahedron results, in a polarization states generator or a polarization state analyser, in optimal values along a wider spectral range. The small oscillations of the curve representing the best condition number in Figure 9D (solid line) are the result of the propagation of numerical noise during the optimization of the angles $\varphi$ and $\theta$ of the polarizer and the retarder respectively for each wavelength, showing that the octahedron in Figure 9C is more sensitive to noise than the optimal rotation shown in Figure 9A.

In the embodiment 100 shown in Figure 10, the polarization state generator 106 may include more than one polarizer, the second, possible third, and up to the nth polarizer 11N, being mounted one after the others along the beam path 5, between the first polarizer 111 and the retarder 12.

The rotation of the second, possible third, and up to the nth polarizer 11N is preferably done in a way to keep parallel the transmission axis of the second, possible third, and up to the nth polarizer 11N with respect to that of the first polarizer 111.

In the same way, the polarization state analyser 108 may include more than one polarizer, the second, possible third, and up to the mth polarizer 14M, being mounted in series, one after the others after the first polarizer 141.

The rotation of the second, possible third, and up to the mth polarizer 14M is preferably done in a way to keep parallel the transmission axis of the second, possible third, and up to the mth polarizer 14M with respect to that of the first polarizer 141.

The method for the polychromatic polarimetric characterization of a target may include, when the polarization state generator 106 comprises more than one polarizer, the rotations of the second polarizer, the third polarizer, until the nth polarizer 11N, being done in a way to keep parallel the transmission axis of the second polarizer, the third polarizer, until the nth polarizer 11N, with respect to that of the first polarizer 111.

This method may also include, when the polarization state analyser 108 comprises more than one polarizer, the rotations of the second polarizer, the third polarizer, until the nth polarizer 14M, being done in a way to keep parallel the transmission axis of the second polarizer, the third polarizer, until the nth polarizer 14M, with respect to that of the first polarizer 141.

The working spectral range of the polychromatic Mueller polarimeter may be considerably enlarged with the use of more than one retarder in the polarization state generator and/or in the polarization state analyser.

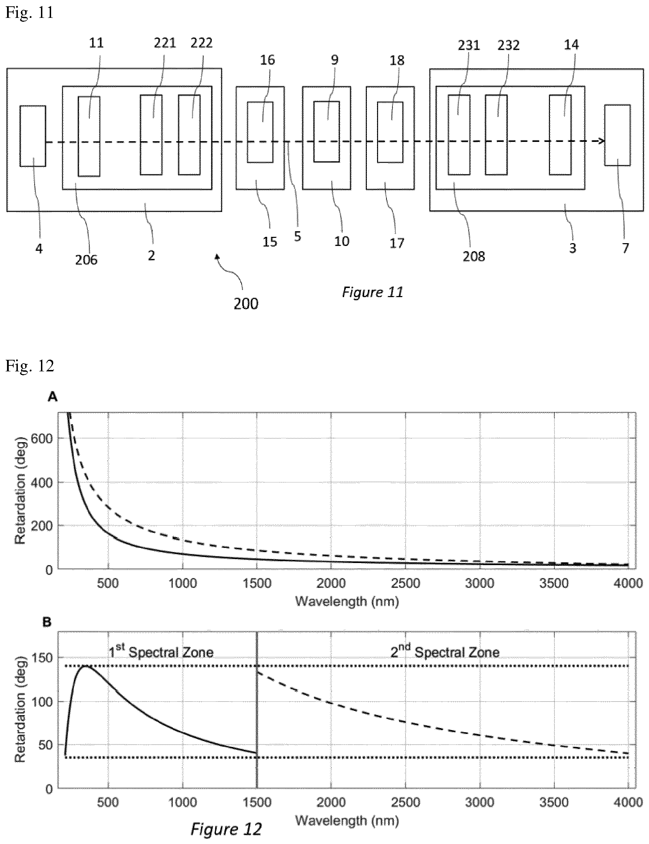

Figure 11 shows an example of an alternative embodiment 200, which is close to the embodiment 1 shown in Figure 1 and previously described. The difference between the polychromatic Mueller polarimeter 1 and the polychromatic Mueller polarimeter 200 is in the number of retarders included in the polarization state generator and in the polarization state analyser. The polarization state generator 206 consists of one rotatable polarizer 11 followed by a first rotatable retarder 221 and a second rotatable retarder 222, and the polarization state analyser 208 consists of a first rotatable retarder 231 followed by a second rotatable retarder 232 and a rotatable polarizer 14.

In this embodiment, retarders 221 and 232 are magnesium fluoride linear retarders specified to be quarter wave plates at 800 nm and retarders 222 and 231 are quartz linear retarders specified to be quarter wave plates at 1450 nm, respectively.

In this embodiment, one retarder of the polarization state generator 206 is a magnesium fluoride linear retarder and the other retarder is a quartz retarder. The magnesium fluoride retarder is specified to be quarter wave at 800 nm and the quartz plate is specified to be quarter wave at 1450 nm. The order in which the magnesium floride and the quartz retarders are mounted in the polarization state generator 206 does not affect the optical response of this one, therefore the magnesium floride and the quarz retarder may be the first retarder 221 and the second retarder 222 respectively, or, alternativelly, the magnesium floride and the quarz retarder may be the second retarder 222 and the first retarder 221 respectively.

Moreover, in this embodiment, one retarder of the polarization state analyzer 208 is a magnesium fluoride linear retarder and the other retarder is a quartz retarder. The magnesium fluoride retarder is specified to be quarter wave at 800 nm and the quartz plate is specified to be quarter wave at 1450 nm. The order in which the magnesium floride and the quartz retarders are mounted in the polarization state analyzer 208 does not affect the optical response of this one, therefore, the magnesium floride and the quarz retarder may be the first retarder 231 and the second retarder 232 respectively, or, alternativelly, the magnesium floride and the quarz retarder may be the second retarder 232 and the first

retarder 231 respectively.

These retarders are easy to produce at competitive prizes. Figure 12A shows the typical retardation of a magnesium fluoride linear retarder specified to be a quarter wave plate at 800 nm (solid line) and of a quartz linear retarder specified to be a quarter wave plate at 1450 nm (dashed line), in the spectral range from 210 nm to 4000 nm, varying between 700° and 20°.

When the optic axis of retarders 221 and 222 are oriented perpendicularly to each other, they behave as a single retarder with retardation bounded between 35° and 140° in the wavelength range from 210 nm to 1500 nm, as shown in Figure 12B (solid line).

In the same way, when the optic axis of retarders 231 and 232 are oriented perpendicularly to each other, they behave as a single retarder with retardation bounded between 35° and 140° in the wavelength range from 210 nm to 1500 nm.

When the optic axis of retarders 221 and 222 are oriented in parallel to each other, they behave as a single retarder with retardation bounded between 35° and 140° in the wavelength range from 1500 nm to 4000 nm, as shown in Figure 12B (dashed line).

In the same way, when the optic axis of retarders 231 and 232 are oriented in parallel to each other, they behave as a single retarder with retardation bounded between 35° and 140° in the wavelength range from 1500 nm to 4000 nm.

According to this embodiment, the wavelength of 1500 nm may be considered as a cut-off wavelength. The whole working spectral range is then divided in two zones; the first spectral zone goes from 210 nm to 1500 nm and the second spectral zone goes from 1500 nm to 4000 nm, shown in Figure 12B.

The operation of the polarisation state generator 206 may be done in two steps. In the first step, measurements are done for wavelengths of the light beam 5 comprised within the first spectral zone. The rotation of the second retarder 222 is done in a way to keep fixed to 90°, or alternatively to 270°, the relative azimuthal angles of the fast axis of the first retarder 221 and the fast axis of the second retarder 222. In the second step, measurements are done for wavelengths of the light beam 5 comprised within the second spectral zone. The rotation of the second retarder 222 is done in a way to keep fixed to 0°, or alternatively to 180°, the relative azimuthal angles of the fast axis of the first retarder 221 and the fast axis of second retarder 222.

In the same way, the operation of the polarisation state analyser 208 is done in two steps. In the first step, measurements are done for wavelengths of the light beam 5 comprised within the first spectral zone. The rotation of the second retarder 232 is done in a way to keep fixed to 90°, or alternatively to 270°, the relative azimuthal angles of the fast axis of the first retarder 231 and the fast axis of the second retarder 232. In the second step, measurements are done for wavelengths of the light beam 5 comprised within the second spectral zone. The rotation of the second retarder 232 is done in a way to keep fixed to 0°, or alternatively to 180°, the relative azimuthal angles of the fast axis of the first retarder 231 and the fast axis of second retarder 232.

In either the first or the second step of operation, the orientation of the polarizer 11 or 14, in the polarization state generator 206 or in the polarization state analyser 208 respectively, may be positioned to a discrete set of azimuthal angles $\varphi$, the azimuthal angle $\varphi$ being the resulting angle between the transmission axis P of the polarizer 11 or 14, and the reference axis of the laboratory or the polarimeter 1 after a discrete rotation of the polarizer 11 or 14, as shown in Figure 2.

In either the first or the second step of operation, for each azimuthal angle $\varphi$ of the polarizer 11 or 14, either in the polarization state generator 206 or in the polarization state analyser 208, an infinite number of polarization states or analysis configurations may be set, when the axis R of the corresponding first retarder, 221 or 231 either in the polarization state generator 206 or in the polarization state analyser 208, is rotated between 0° and 360° at an infinite number of azimuthal angles $\theta$, as shown in Figure 3.

In either the first or the second step of operation, the matrices W and A, representing the polarization states generated by the polarization state generator 206 and the polarization analysis configurations created by the polarization state analyser 208 respectively, are optimized in terms of their condition number, which is approximately equal to the optimal value of $1/\sqrt{3}$ (2-norm), which is the maximum achievable with passive optical elements.

The retarders 221 and 222 of the polarization state generator 206 and the retarders 231 and 232 of the polarization state analyser 208 may be non-achromatic, therefore, either in the first or the second step of operation, the set of angles $\varphi$ and $\theta$ must be preferably adapted for each wavelength in the whole working spectral range to obtain the optimal value $1/\sqrt{3}$.

If in a given spectral zone, the azimuthal angles $\varphi$ and $\theta$ do not strongly depend on wavelength, a spectrally averaged value may be advantageously set for such azimuthal angles $\varphi$ and $\theta$ provided that the condition number is kept close, preferably within 20%, to the optimal value $1/\sqrt{3}$.

In either the first or the second step of operation, the number of polarization states generated by the polarization state generator 206 may be equal to four, and the number of analysis configurations created by the polarization state analyser 208 may be also equal to four.

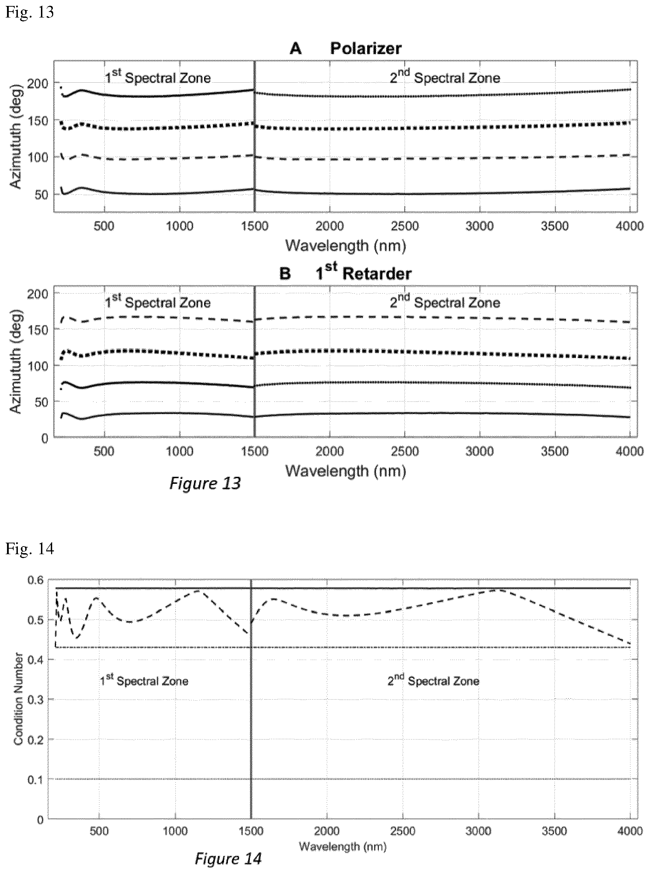

Figure 13A shows the spectral dependence in the range from 210 nm to 4000 nm of four azimuthal angles $\varphi$ of the polarizer 11 in the polarization state generator 206, needed to reach the optimal condition if the first retarder 221 is a magnesium fluoride linear retarder being specified to be quarter wave plate at 800 nm and if the second retarder 222 is a quartz linear retarder specified to be quarter wave plate at 1450 nm. In either the first, or the second spectral zone, the value of the azimuthal angles $\varphi$ of the polarizer 11 used to create each one of the corresponding four polarization states, scarcely varies with the wavelength of the light beam 5 within the spectral range considered. In average, the value of the azimuthal angle $\varphi$ of the polarizer 11 generating the first, second, third and fourth polarization states, are 52°, 99°, 140° and 185° respectively in the first spectral zone. The azimuthal angle $\varphi$ of the polarizer 11 generating the first, second, third and fourth polarization states, are 52°, 98°, 140° and 184° respectively, in the second spectral zone.

The four azimuthal angles $\varphi$ of the polarizer 11 given previously are examples used to create four optimal polarization states to be used either within the first spectral zone or within the second spectral zone. Any other values could be chosen for the four azimuthal angles $\varphi$ of the polarizer 11.

Figure 13B shows the spectral dependence of the corresponding azimuthal angles $\theta$ of the retarder 221 required to reach an optimal condition number. Said angles are valid for a first retarder 221 being a magnesium fluoride linear retarder specified to be quarter wave plate at 800 nm and for a second retarder 222 being a quartz linear retarder specified to be quarter wave plate at 1450 nm. As for the polarizer 11, the values of the azimuthal angles $\theta$ of the retarder 221 in the polarization state generator 206 do not considerably change within the spectral range considered. In average, the value of the azimuthal angle $\theta$ of the retarder 221 needed to generate the first, second, third and fourth polarization states, given the azimuthal angles $\varphi$ of the polarizer 11, are 31°, 164°, 116° and 74° respectively, in the first spectral zone. In average, the corresponding values of the retarder 221 in the second spectral zone are 32°, 164°, 116° and 74° respectively.

As the four azimuthal angles $\theta$ of the retarder 221 depend on the four azimuthal angles $\varphi$ of the polarizer 11 to reach the optimal condition, if the polarizer 11 had different azimuthal angles $\varphi$, then the azimuthal angles $\theta$ of the retarder 221 would be different too. If the retarders 221 and 222 had a different nominal retardation, then the azimuthal angles $\varphi$ of the polarizer 11 and the corresponding azimuthal angles $\theta$ of the retarders would be different of these given here as an illustrative example.

Figure 14 shows that, within the spectral range of the radiation source, from 210 nm to 4000 nm, the condition number associated to the matrix W reaches the theoretical maximum of $1/\sqrt{3}$ if the optimized set of azimuthal angles $\varphi$ and $\theta$ of the polarizer 11 and the retarder 221 respectively are used for each wavelength (solid line). The latter means that the polarization state generator 206 is optimal in terms of reduction of noise and error propagation. Figure 14 also shows that if a spectral average of the optimal azimuthal angles $\varphi$ and $\theta$ of the polarizer 11 and the retarder 221 respectively are used, the condition number, albeit not optimal for all the wavelengths, is close, within an interval of 20%, to the maximum of $1/\sqrt{3}$ (dashed line).

As the polarization state analyser 208 consists of the same elements for the polarizer 14 and the retarders 231 and 232 as the polarization state generator 206, it gives the same results, meaning being optimal in terms of noise propagation within the spectral range of the radiation source 4, if it is set to the same combination of azimuthal angles $\varphi$ and $\theta$.

As there are four polarization states and four analysis configurations for each wavelength within either the first or the second spectral zones above-mentioned, the corresponding matrices W and A, are square and of dimension four. Moreover, the polyhedrons in the Poincaré sphere defined by the Stokes vectors associated to the matrix W and the Stokes vectors associated to the matrix A respectively are both regular tetrahedrons, regular tetrahedrons being spherical 2 designs.

The method for generating a Mueller matrix of the sample 9 with the polychromatic Mueller polarimeter 200 of Figure 11, may comprise:

- generating a polychromatic radiation light beam 5 with a continuous or a discrete distribution of wavelengths comprised in the range between 210 nm and 4000 nm,
- directing the light beam 5 through the polarization state generator 206 being set such that its condition number is as close as possible to $1/\sqrt{3}$ (2-norm),
- directing the light beam emerging from the polarization state generator 206 toward the sample 9,
- directing the light beam transmitted by the sample 9 through the polarization state analyser 208 set such that its condition number is as close as possible to $1/\sqrt{3}$ (2-norm),
- detecting spectrally resolved intensities of the light beam 5 downstream of the polarization state analyser 208 to generate the characterization of the sample, for four polarisation states created by the polarization state generator 206 and four analysis configurations set by the polarization state analyser 208, during periods of time when the polarizers 11 and 14, and the retarders 221, 222, 231 and 232, are kept still.

The method for generating a Mueller matrix of the sample 9 with the polychromatic Mueller polarimeter 200 of Figure 11, may also include:

- choosing a discrete set of four different polarization states in the first spectral zone, from 210 nm to 1500 nm, by rotating the polarizer 11 of the polarization state generator 206 to preferably four different azimuthal angles $\varphi$, by rotating the second retarder 222 of the polarization state generator 206 in order to keep its optic axis perpendicular to that of the first retarder 221 of the polarization state generator 206, and by rotating the first retarder 221 of the polarization state generator 206 to preferably four different azimuthal angles $\theta$ to create different polarization states,
- choosing a discrete set of four different polarization states in the second spectral zone, from 1500 nm to 4000 nm, by rotating the polarizer 11 of the polarization state generator 206 to preferably four different azimuthal angles $\varphi$, by rotating the second retarder 222 of the polarization state generator 206 in order to keep its optic axis parallel to that of the first retarder 221 of the polarization state generator 206, and by rotating the first retarder 221 of the polarization state generator 206 to preferably four different azimuthal angles $\theta$ to create different polarization states,
- choosing a discrete set of four different analysis configurations in the first spectral zone, from 210 nm to 1500 nm, by rotating the polarizer 14 of the polarization state analyser 208 to preferably four different azimuthal angles $\varphi$, by rotating the first retarder 231 of the polarization state analyser 208 in order to keep its optic axis perpendicular to that of the second retarder 232 of the polarization state analyser 208, and by rotating the second retarder 232 of the polarization state analyser 208 to preferably four different azimuthal angles $\theta$ to create different analysis configurations,
- choosing a discrete set of four different analysis configurations in the second spectral zone, from 1500 nm to 4000 nm, by rotating the polarizer 14 of the polarization state analyser 208 to preferably four different azimuthal angles $\varphi$, by rotating the first retarder 231 of the polarization state analyser 208 in order to keep its optic axis parallel to that of the second retarder 232 of the polarization state analyser 208, and by rotating the second retarder 232 of the polarization state analyser 208 to preferably four different azimuthal angles $\theta$ to create different analysis configurations,,
- recording for each polarization state generated by the polarization state generator 206 and each analysis configurations generated by the polarization state analyser 208, the intensity of the light beam 5 downstream of the polarization state analyser 208.

The four column Stokes vectors corresponding to the four polarization states generated by the polarization state generator 206 either in the first or the second step of operation, are represented in a square matrix W of dimension 4. The four row Stokes vectors corresponding to the four polarization analysis configurations set by the polarization state analyser 208 in either the first or the second step of operation, are represented in square matrix A of dimension four.

The number of measurements required to determine a full Mueller matrix for each wavelength of the light beam 5 is sixteen, and the measurements are ordered in a square matrix B. With W and A the matrices representing the polarization states and the analysis configurations respectively, the Mueller matrix of the probed sample 9 may be obtained with the equation:

$$M = A^{-1}BW^{-1}$$

Before using the polychromatic polarimeter to probe the sample 9, the matrices W and A may be determined using a calibration protocol.

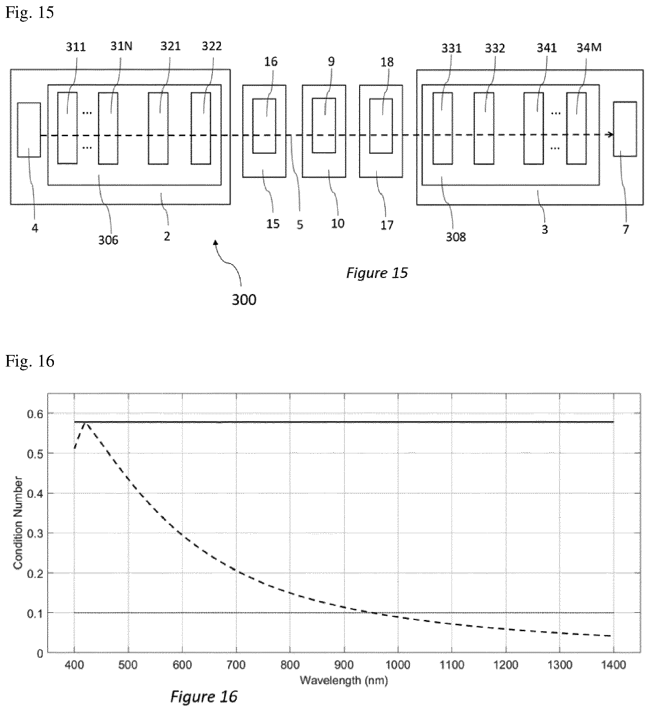

In the embodiment 300 shown in Figure 15, the polarization state generator 306 may include more than one polarizer, the second, possible third, and up to the nth polarizer 31N, being mounted one after the others along the beam path 5, between the first polarizer 311 and the two retarders 321 and 322.

The rotation of the second, possible third, and up to the nth polarizer 31N is preferably done in a way to keep parallel the transmission axis of the second, possible third, and up to the nth polarizer 31N with respect to that of the first polarizer 311.

In the same way, the polarization state analyser 308 may include more than one polarizer, the second, possible third, and up to the mth polarizer 34M, being mounted in series, one after the others after the first polarizer 341.

The rotation of the second, possible third, and up to the mth polarizer 34M is preferably done in a way to keep parallel the transmission axis of the second, possible third, and up to the mth polarizer 34M with respect to that of the first polarizer 341.

The method for the polychromatic polarimetric characterization of a target may include, when the polarization state generator 306 comprises more than one polarizer, the rotations of the second polarizer, the third polarizer, until the nth polarizer 31N, being done in a way to keep parallel the transmission axis of the second polarizer, the third polarizer, until the nth polarizer 31N, with respect to that of the first polarizer 311.

This method may also include, when the polarization state analyser 308 comprises more than one polarizer, the rotations of the second polarizer, the third polarizer, until the nth polarizer 34M, being done in a way to keep parallel the transmission axis of the second polarizer, the third polarizer, until the nth polarizer 34M, with respect to that of the first polarizer 341.

The embodiments described previously are provided for illustrative purposes only. Therefore, the characteristics of these embodiments, such as for instance, the cited spectral range, the type and characteristics of the polarizers and retarders used in the polarization state generator and the polarization state analyser, the number of polarization state generators and polarization state analysers in the polarimeter, the transmission configuration described, or the number of polarizers or retarders in either the polarization state generator or the polarization state analyser, may vary without departing from the scope of the present invention.

Tests

A first comparison has been made between two polarization state generators the first one comprising a rotating polarizer and a rotating retarder, the second one comprising a fixed polarizer and a rotating retarder.

In order to make results comparable, the two polarization state generators are based on the same optical components, one polarizer and one retarder providing the same retardation.

The results are reported in Figure 16. While the condition number of the polarization state generator in the first configuration (solid line) stays constant and at an optimal value within the whole spectral range considered here, the condition number of the polarization state generator mounted in the second configuration (dashed line) only reaches the maximum value for a single point and shows a strong spectral dependence.

**Claims**

1. A system (1 ; 100 ; 200 ; 300) for the polarimetric characterization of a target (9), comprising:

   - a polychromatic illumination source (4) for emitting a polychromatic radiation light beam (5),
   - downstream from said illumination source (4) and upstream from said target (9), at least one polarization state generator (6 ; 106 ; 206 ; 306) including at least one rotatable polarizer (11 ; 111 ; 11N ; 311 ; 31N) and at least one rotatable retarder (12 ; 221 ; 222 ; 321 ; 322),
   - downstream from said target (9), at least one polarization state analyser (8 ; 108; 208 ; 308) including at least one rotatable retarder (13 ; 231 ; 232 ; 331 ; 332) and at least one rotatable polarizer (14 ; 141 ; 14M ; 341 ; 34M),
   - at least one detection system (7) for measuring an intensity of the light beam (5) downstream the at least one polarization state analyser (8 ; 108 ; 208 ; 308).

2. System according to claim 1, the polarization state generator (6 ; 106 ; 206 ; 306) having an azimuthal orientation so that its condition number is higher than 0.1, preferably equal to $1/\sqrt{3}$ (2-norm) with an uncertainty less than 20%, preferably equal to $1/\sqrt{3}$ (2-norm) with an uncertainty less than 10%, more preferably equal to $1/\sqrt{3}$ (2-norm) with an uncertainty less than 1%, and/or
the polarization state analyser (8 ; 108 ; 208 ; 308) having an azimuthal orientation so that its condition number is higher than 0.1, preferably equal to $1/\sqrt{3}$ (2-norm) with an uncertainty less than 20%, preferably equal to $1/\sqrt{3}$ (2-norm) with an uncertainty less than 10%, more preferably equal to $1/\sqrt{3}$ (2-norm) with an uncertainty less than 1%.

3. The system of claim 1 or 2, wherein

   - the polyhedron in the Poincaré sphere related to the polarization states generated by the polarization state generator (6 ; 106 ; 206 ; 306) forms a spherical 2 design, preferably oriented in a way that none of the vertices of the polyhedron is located either at the north pole or at the south pole of the sphere and in a way that the following expression, S $= \sum_i^N |1/\cos\Lambda_i|$ , reaches its minimum value with an uncertainty of 50% or less, preferably with an uncertainty of 30% or less , N being the number of vertices of the polyhedron, the symbol |..| representing the absolute value, and $\Lambda_i$ being the geodesic coordinate corresponding to the latitude of the i-th vertex of the polyhedron,
   and/or
   - the polyhedron in the Poincaré sphere related to the analysis configurations set by the polarization state analyser (8 ; 108 ; 208 ; 308) ) forms a spherical 2 design, preferably oriented in a way that none of the vertices of the polyhedron is located either at the north pole or at the south pole of the sphere and in a way that the following expression, S $= \sum_i^N |1/\cos\Lambda_i|$ , reaches its minimum value with an uncertainty of 50% or less, preferably with an uncertainty of 30 % or less, N being the number of vertices of the polyhedron, the symbol |..| representing the absolute value, and $\Lambda_i$ being the geodesic coordinate corresponding to the latitude of the i-th vertex of the polyhedron.

4. The system of any one of claims 1 to 3, the illumination source (4) allowing to select a range of wavelengths of the outputted light beam (5), and/or the detection system (7) being configured to measure sequentially the intensity of a plurality of wavelengths of the light beam (5) or to measure simultaneously the intensity of a plurality of wavelengths of the light beam (5) or to measure simultaneously and separately the intensity of a plurality of wavelengths of the light beam (5).

5. The system of any one of claims 1 to 4, at least one retarder (12 ; 221 ; 222 ; 321 ; 322), preferably all the retarders (12 ; 221 ; 222 ; 321 ; 322), of the polarization state generator (6 ; 106 ; 206 ; 306) being non-achromatic retarders, being possibly either half wave retarders or quarter wave retarders for at least one wavelength, and/or,
at least one retarder (13 ; 231 ; 232 ; 331 ; 332), preferably all the retarders (13 ; 231 ; 232 ; 331 ; 332), of the polarization state analyser (8 ; 108; 208 ; 308) being non-achromatic retarders, being possibly either half wave retarders or quarter wave retarders for at least one wavelength,.

6. The system of any one of claims 1 to 5, the detection system (7) being configured to measure the intensity of the light beam (5) during periods of non-rotation of the retarders (12 ; 221 ; 222 ; 321 ; 322) and/or of the polarizers (11 ; 111 ; 11N ; 311 ; 31N) of the polarization state generator (6 ; 106 ; 206 ; 306), and/or the detection system (7) being configured to measure the intensity of the light beam (5) during periods of non-rotation of the retarders (13 ; 231 ; 232 ; 331 ; 332) and/or of the polarizers (14 ; 141 ; 14M ; 341 ; 34M) of the polarization state analyser (8 ; 108; 208 ; 308).

7. The system of any one of claims 1 to 6, the first polarizer (11 ; 111 ; 311) and the first retarder (12 ; 221 ; 321) of the polarization state generator (6 ; 106 ; 206 ; 306) being mounted so as to able to be rotated independently of each other to different azimuthal angles ($\varphi$, $\theta$), and/or
the first polarizer (14 ; 141 ; 341) and the first retarder (13 ; 231 ; 331) of the polarization state analyser (8 ; 108 ; 208 ; 308) being mounted so as to be able to be rotated independently of each other to different azimuthal angles ($\varphi$, $\theta$).

8. The system of any one of claims 1 to 7, being configured to allow the light beam (5) emerging from the polarization state generator (6 ; 106 ; 206 ; 306) to propagate through the target (9) and then through the polarization state analyser (8 ; 108 ; 208 ; 308), and/or to be reflected by the target (9) and then propagate through the polarization state analyser (8 ; 108 ; 208 ; 308), and/or to be scattered by the target (9) and then propagate through the polarization state analyser (8 ; 108 ; 208 ; 308).

9. The system of any one of claims 1 to 8, the polarization state generator (6) being constituted by a single polarizer (11) and a single retarder (12) mounted after the polarizer (11) following the direction of propagation of the light beam (5), or

the polarization state generator (206) being constituted by a single polarizer (11) and two retarders (221 ; 222) mounted sequentially after the polarizer (11) following the direction of propagation of the light beam (5), or

the polarization state generator (106) comprising n polarizers, the second polarizer, the third polarizer till the nth polarizer (11N) being mounted sequentially after the first polarizer (111) following the direction of propagation of the light beam (5), and a single retarder (12) mounted after the nth polarizer (11N) following the direction of propagation of the light beam (5), or

the polarization state generator (306) comprising n polarizers, the second polarizer, the third polarizer till the nth polarizer (31N) being mounted sequentially after the first polarizer (311) following the direction of propagation of the light beam (5), and two retarders (321 ; 322) mounted sequentially after the nth polarizer (31N) following the direction of propagation of the light beam (5).

10. The system of any one of claims 1 to 9, the polarization state analyser (8) being constituted by a single polarizer (14) and a single retarder (13) mounted before the polarizer (14) following the direction of propagation of the light beam (5), or

the polarization state analyser (208) being constituted by a single polarizer (14) and two retarders (231 ; 232) mounted sequentially before the polarizer (14) following the direction of propagation of the light beam (5), or

the polarization state analyser (108) comprising m polarizers, the second polarizer, the third polarizer till the mth polarizer (14M) being mounted sequentially after the first polarizer (141) following the direction of propagation of the light beam (5), and a single retarder (13) mounted before the first polarizer (141) following the direction of propagation of the light beam (5), or

the polarization state analyser (308) comprising m polarizers, the second polarizer, the third polarizer till the mth polarizer (34M) being mounted sequentially after the first polarizer (341) following the direction of propagation of the light beam (5), and two retarders (331 ; 332) mounted sequentially before the first polarizer (341) following the direction of propagation of the light beam (5).

11. The system of claim 9 or 10, the second retarder (222 ; 322) of the polarization state generator (206 ; 306) being mounted so as to keep its axis perpendicular to that of the first retarder (221 ; 321) of the polarization state generator (206 ; 306), or the second retarder (222 ; 322) of the polarization state generator (206 ; 306) being mounted so as to keep its axis parallel to that of the first retarder (221 ; 321) of the polarization state generator (206 ; 306), and/or the second retarder (232 ; 332) of the polarization state analyser (208 ; 308) being mounted so as to keep its axis perpendicular to that of the first retarder (231 ; 331) of the polarization state analyser (208 ; 308), or the second retarder (232 ; 332) of the polarization state analyser (208 ; 308) being mounted so as to keep its axis parallel to that of the first retarder (231 ; 331) of the polarization state analyser (208 ; 308).

12. A method for the polychromatic polarimetric characterization of a target (9), in particular with a system as defined in any one of claims 1 to 11, preferably for generating a Mueller matrix of the target (9), more preferably a 4 by 4 Mueller matrix, the method comprising:

- generating a polychromatic radiation light beam (5),
- directing the light beam (5) through at least one polarization state generator (6 ; 106 ; 206 ; 306), the latter including at least one rotatable polarizer (11 ; 111 ; 11N ; 311 ; 31N) and at least one rotatable retarder (12 ; 221 ; 222 ; 321 ; 322),
- directing the light beam (5) emerging from the polarization state generator (6 ; 106 ; 206 ; 306) toward the target (9),
- directing the light beam (5) transmitted by, reflected by and/or scattered by the target (9) through at least one polarization state analyser (8 ; 108 ; 208 ; 308), the latter including at least one rotatable retarder (13 ; 231 ; 232 ; 331 ; 332) and at least one rotatable polarizer (14 ; 141 ; 14M ; 341 ; 34M ),
- detecting spectrally resolved intensities of the light beam (5) downstream of the polarization state analyser (8 ; 108 ; 208 ; 308) for various states of the polarization state generator (6 ; 106) and the polarization state analyser (8 ; 108 ; 208 ; 308) to generate the characterization.

13. The method of claim 12, wherein the polarization state generator (6 ; 106 ; 206 ; 306) is set such that its condition number is higher than 0.1, preferably equal to $1/\sqrt{3}$ (2-norm) with an uncertainty less than 20%, preferably equal to $1/\sqrt{3}$ (2-norm) with an uncertainty less than 10%, more preferably equal to $1/\sqrt{3}$ (2-norm) with an uncertainty less than 1%, and/or
the polarization state analyser (8 ; 108 ; 208 ; 308) is set such that its condition number is higher than 0.1, preferably equal to $1/\sqrt{3}$ (2-norm) with an uncertainty less than 20%, preferably equal to $1/\sqrt{3}$ (2-norm) with an uncertainty less than 10%, more preferably equal to $1/\sqrt{3}$ (2-norm) with an uncertainty less than 1%.

14. The method of claim 12 or 13, including :

- choosing a discrete set of at least four distinct polarization states, by rotating the first polarizer (11 ; 111 ; 311) of the polarization state generator (6 ; 106 ; 206 ; 306) to at least four distinct azimuthal angles ($\varphi$) and by rotating the first retarder (12 ; 221 ; 321) of the polarization state generator (6 ; 106 ; 206 ; 306) to at least four distinct azimuthal angles ($\theta$),
- keeping the optic axis of the second retarder (222 ; 322) either parallel or perpendicular to the optic axis of the first retarder (221 ; 321), if the polarization state generator (6 ; 106 ; 206 ; 306) comprises two retarders,
- recording for each polarization state generated by the polarization state generator (6 ; 106 ; 206 ; 306) the intensity of the light beam (5) downstream of the polarization state analyser (8 ; 108 ; 208 ; 308), and/or
- choosing a discrete set of at least four distinct analysis configurations by rotating the first polarizer (14 ; 141 ; 341) of the polarization state analyser (8 ; 108 ; 208 ; 308) to at least four distinct azimuthal angles ($\varphi$) and by rotating the first retarder (13 ; 231 ; 331) of the polarization state analyser (8 ; 108 ; 208 ; 308) to at least four distinct azimuthal angles ($\theta$),
- keeping the optic axis of the second retarder (232 ; 332) either parallel or perpendicular to the optic axis of the first retarder (231 ; 331), if the polarization state analyser (8 ; 108 ; 208 ; 308) comprises two retarders,
- recording for each analysis configuration generated by the polarization state analyser (8 ; 108 ; 208 ; 308) the intensity of the light beam (5) downstream of the polarization state analyser (8 ; 108 ; 208 ; 308).

15. The method of any one of claims 12 to 14, the rotations of the second polarizer of the polarization state generator (106 ; 306), the third polarizer of the polarization state generator (106 ; 306), till the nth polarizer (11N ; 31N) of the polarization state generator (106 ; 306), being done in a way to keep parallel the transmission axis of the second polarizer of the polarization state generator (106 ; 306), the third polarizer of the polarization state generator (106 ; 306), till the nth polarizer (11N ; 31N) of the polarization state generator (106 ; 306), with respect to that of the first polarizer (111 ; 311) of the polarization state generator (106 ; 306), and/or
the rotations of the second polarizer of the polarization state analyser (108 ; 308), the third polarizer of the polarization state analyser (108 ; 308), till the mth polarizer (14M ; 34M) of the polarization state analyser (108 ; 308), being done in a way to keep parallel the transmission axis of the second polarizer of the polarization state analyser (108 ; 308), the third polarizer of the polarization state analyser (108 ; 308), till the mth polarizer (14M ; 34M) of the polarization state analyser (108 ; 308), with respect to that of the first polarizer (141 ; 341) of the polarization state analyser (108 ; 308).

Fig. 1

Figure 1

Fig. 2

Figure 2

Fig. 3

Figure 3

Fig. 4

Figure 4

Fig. 5

*Figure 5*

Fig. 6

*Figure 6*

Fig. 7

*Figure 7*

Fig. 8

Figure 8

Fig. 9

**A    Optimally Oriented Octahedron**

**B    Optimally Oriented Octahedron**

— P. by P. Optim. Azim.
- - Averaged Optim. Azim.

**C    Non-Optimally Oriented Octahedron**

**D    Non-Optimally Oriented Octahedron**

— P. by P. Optim. Azim.
- - Averaged Optim. Azim.

*Figure 9*

Fig. 10

*Figure 10*

Fig. 11

Figure 11

Fig. 12

Figure 12

Fig. 13

*Figure 13*

Fig. 14

*Figure 14*

Fig. 15

311  31N  321  322      16      9      18      331  332  341  34M

Figure 15

4      306      2      15  5  10  17      308      3      7

300

Fig. 16

Figure 16

Europäisches
Patentamt

European
Patent Office

Office européen
des brevets

# EUROPEAN SEARCH REPORT

**Application Number**

EP 22 30 5776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 618 145 B1 (GOLDSTEIN DENNIS H [US] ET AL) 9 September 2003 (2003-09-09) | 1,4, 7-10,12 | INV. G01N21/21 |
| Y | * column 1, lines 18-21 * <br> * column 2, lines 6-14 * | 2-4,6, 13,14 | G01N21/25 |
| A | * column 2, lines 35-38 * <br> * column 2, line 60 - column 3, line 8 * <br> * column 4, lines 38-46 * <br> * column 5, lines 2-4 * <br> * claim 1 * <br> * figure 1 * | 11,15 | |
| | ----- | | |
| X | US 9 274 440 B2 (HEMPELMANN UWE [DE]; MENGEL MARKUS [DE] ET AL.) 1 March 2016 (2016-03-01) | 1,4,5, 8-10,12 | |
| Y | * column 4, lines 21-24 * <br> * column 5, lines 34-40 * | 2-4,6, 13,14 | |
| A | * column 5, lines 60-65 * <br> * column 6, lines 13-15 * <br> * column 6, lines 44-48 * <br> * column 6, lines 51-53 * <br> * figure 1 * | 11,15 | TECHNICAL FIELDS SEARCHED (IPC) |
| | ----- | | |
| Y,D | US 7 298 480 B2 (ECOLE POLYTECH [FR]) 20 November 2007 (2007-11-20) * column 3, lines 46-51 * <br> * column 6, lines 40-47 * <br> * column 7, lines 12-15 * <br> * column 7, lines 36-52 * <br> * column 8, lines 3-21 * <br> * column 9, lines 14-17 * <br> * column 9, lines 31-34 * <br> * claim 1 * | 2,4,6, 13,14 | G01N |
| | ----- | | |
| | -/-- | | |

The present search report has been drawn up for all claims

| Place of search | Date of completion of the search | Examiner |
|---|---|---|
| Munich | 31 October 2022 | Hoogen, Ricarda |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GOUDAIL FRANÇOIS: "Optimal Mueller matrix estimation in the presence of additive and Poisson noise for any number of illumination and analysis states", OPTICS LETTERS, vol. 42, no. 11, 31 May 2017 (2017-05-31), page 2153, XP055976243, US ISSN: 0146-9592, DOI: 10.1364/OL.42.002153 * page 2153 * ----- | 3 | |
| | | | TECHNICAL FIELDS SEARCHED (IPC) |

The present search report has been drawn up for all claims

| Place of search | Date of completion of the search | Examiner |
|---|---|---|
| Munich | 31 October 2022 | Hoogen, Ricarda |

EPO FORM 1503 03.82 (P04C01)

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

&&: member of the same patent family, corresponding
   document

page 2 of 2

## ANNEX TO THE EUROPEAN SEARCH REPORT
## ON EUROPEAN PATENT APPLICATION NO.

**EP 22 30 5776**

This annex lists the patent family members relating to the patent documents cited in the above-mentioned European search report.
The members are as contained in the European Patent Office EDP file on
The European Patent Office is in no way liable for these particulars which are merely given for the purpose of information.

**31-10-2022**

| Patent document cited in search report | | Publication date | Patent family member(s) | | Publication date |
|---|---|---|---|---|---|
| US 6618145 | B1 | 09-09-2003 | NONE | | |
| | | | | | |
| US 9274440 | B2 | 01-03-2016 | CN | 102713761 A | 03-10-2012 |
| | | | DE 102010001336 | B3 | 28-07-2011 |
| | | | JP | 5650759 B2 | 07-01-2015 |
| | | | JP | 2013518418 A | 20-05-2013 |
| | | | KR | 20120102098 A | 17-09-2012 |
| | | | TW | 201140253 A | 16-11-2011 |
| | | | US | 2013021592 A1 | 24-01-2013 |
| | | | WO | 2011091891 A2 | 04-08-2011 |
| | | | | | |
| US 7298480 | B2 | 20-11-2007 | EP | 1963822 A1 | 03-09-2008 |
| | | | JP | 2009520959 A | 28-05-2009 |
| | | | US | 2007146706 A1 | 28-06-2007 |
| | | | WO | 2007071480 A1 | 28-06-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7298480 B

### Non-patent literature cited in the description

- **D.S. SABATKE et al.** Optimization of retardance for a complete Stokes polarimeter. *Opt. Lett.,* 2000, vol. 25, 802-804
- **J.S. TYO.** Design of optimal polarimeters: maximization of signal-to-noise ratio and minimization of systematic error. *App. Opt.,* 2002, vol. 41, 619
- **M.R. FOREMAN et al.** On the equivalence of optimization metrics in Stokes polarimetry. *Opt. Eng,* 2019, vol. 58, 082410
- **M.R. FOREMAN et al.** Optimal Frames for Polarization State Reconstruction. *Phys. Rev. Lett.,* 2015, vol. 115, 263901
- **P. DELSARTE et al.** Spherical codes and designs. *Geometriae Dedicata,* 1977, vol. 6, 363
- **Y. MIMURA.** A construction of spherical 2-design. *Graphs Combi.,* 1990, vol. 6, 369
- **P.S HAUGE.** Recent developments in instrumentation in ellipsometry. *Surf. Sci.,* 1980, vol. 96, 108
- **E. GARCIA-CAUREL et al.** Mid-infrared Mueller ellipsometer with pseudo-achromatic optical elements. *Appl. Opt.,* 2015, vol. 54, 2776
- **Q. ZHAO et al.** Geometric optimization method for a polarization state generator of a Mueller matrix microscope. *Opt. Lett.,* 2021, vol. 46, 5631-5634
- **D.S. SABATKE.** *Opt. Lett.,* 2000, vol. 25, 802-804
- **E. COMPAIN.** General and Self-consistent Method for the Calibration of Polarization Modulators, Polarimeters, and Mueller-Matrix Ellipsometers. *Appl. Opt.,* 1999, vol. 38, 3490
- **R. OSSIKOVSKI.** Polarizer calibration method for Mueller matrix polarimeters. *Appl. Opt.,* 2020, vol. 59, 10389